# EUROPÄISCHE PATENTANMELDUNG

(11) **EP 1 927 694 A1**
(43) Veröffentlichungstag der Anmeldung: **04.06.2008**
(21) Anmeldenummer: 06124801.9
(22) Anmeldetag: 27.11.2006
(51) Int. Cl.: D06M 11/13, A01N 59/16, A01N 25/22

(54) **Verfahren zur Ausrüstung von Textilien mit desensibilisierten Silberkomponenten**

(71) Anmelder: Sanitized AG, 3400 Burgdorf (CH)
(72) Erfinder: Bender, Walter, 4310 Rheinfelden (CH); Bonetti, Marco, 3400 Burgdorf (CH)
(74) Vertreter: Jacobi, Markus Alexander

(57) **Zusammenfassung**

Ein Verfahren zum Ausrüsten von Fasern und Textilien mit einer antimikrobiellen Wirkstoffstoff-komponente, bei dem als antimikrobielle Wirkstoffkomponente mindestens eine durch eine Zusatz-komponente, wie Pinakryptolgelb, desensibilisierte Silberkomponente auf die Fasern bzw. Textilien aufgebracht wird, ermöglicht einen dauerhaften Schutz von Textilien gegen bakteriellen Befall und unerwünschte Verfärbungen der Textilien.

## Beschreibung

Die Erfindung betrifft ein Verfahren zum antimikrobiellen Ausrüsten von Fasern und Textilien, eine antimikrobielle Zubereitung und die mit einer speziellen antimikrobiellen Komponente ausgerüsteten Fasern und Textilien. Der antimikrobielle Wirkstoff besteht dabei im Wesentlichen aus einer desensibilisierten Silberkomponente, beispielsweise Silberchlorid. Der antimikrobielle Wirkstoff eignet sich u. a. als Hilfsmittel zur Ausrüstung von Fasern, Garnen, Vliese und Textilien.

Die meisten Textilien enthalten mikrobiologisch abbaubares Material. Sie sind häufig entweder vollständig oder teilweise aus mikrobiologisch abbaubaren Fasern hergestellt, beispielsweise aus Baumwolle, Cellulose (z. B. Viskose und Tencel), Hanf, Flachs, Leinen, Seide, Acetat oder Wolle. Auch Textilien aus synthetischen Fasern wie z.B. Polyester, Polyacrylnitril, Polyamid (z. B. Aramid, Nomex, Kevlar, Polyamid 6, Polyamid 6.6) oder Polypropylen, werden von Bakterien besiedelt, insbesondere dann, wenn sie mit Ausrüstungsmitteln, wie z.B. Weichmachern, Hydrophobierungsmitteln, Antistatika und/oder Bindern versehen werden oder während des Gebrauchs mikrobiologisch abbaubares Material aufnehmen, wie z.B. organische Substanzen aus der Umwelt.

Durch den Befall der Textilien mit Mikroorganismen wie Bakterien können nicht nur die Optik sondern auch die Gebrauchseigenschaften der Textilien negativ verändert werden. Darüber hinaus können beispielsweise bei Bakterien durch die Freisetzung von Stoffwechselprodukten unangenehme Geruchsbelästigungen und Gesundheitsgefährdungen auftreten. Es ist daher erforderlich, Fasern bzw. Textilien mit Konservierungsmitteln, insbesondere mit antimikrobiellen Komponenten auszurüsten, um einen Befall durch Mikroorganismen, wie z. B. Bakterien, zu verhindern oder zumindest zu minimieren.

Bei der Ausrüstung der Faser bzw. der Textilien mit antimikrobiellen Wirkstoffen treten jedoch häufig Schwierigkeiten auf, die sowohl den Ausrüstungsvorgang als solchen als auch durch die Ausrüstung entstehende Phänomene betreffen.

In der Textilindustrie werden hohe Ansprüche an die zur Ausrüstung von Fasern und Textilen verwendeten antimikrobiellen Komponenten gestellt. Die Fasern bzw. Textilien werden beispielsweise nach dem Ausrüsten bei Temperaturen von 100 bis 130°C getrocknet und anschließend bei Temperaturen bis 180°C behandelt, beispielsweise, um die "eingefrorene Spannung" abzubauen und polymere Komponente aus zu polymerisieren. Dabei kann die antimikrobielle Komponente zerstört werden oder die hohe Abdampfrate der antimikrobiellen Komponente kann zu Wirkstoffverlusten führen. Der nach dem Ausrüsten auf der Faser verbliebene antimikrobielle Wirkstoff kann bedingt durch die große Oberfläche der Textilien und die geringe Schichtdicke der Ausrüstung im praktischen Gebrauch bei Waschvorgängen des Textils ausgewaschen werden. Hierdurch ist ein weiterer, zeitlich abgestufter Wirkstoffverlust zu verzeichnen. Weiterhin kann bei Licht-empfindlichen antimikrobiellen Zubereitungen auch der Einfluss von Licht zu einer Zersetzung der antimikrobiellen Wirkstoffe führen. Nach erfolgter Ausrüstung sind durch die Wechselwirkung der antimikrobiellen Komponente mit anderen Bestandteilen unerwünschte Verfärbungen der Textilien zu beobachten.

Im Stand der Technik werden bereits wirksame antimikrobielle Wirkstoffe beschrieben, die eine geringe Abdampfrate aufweisen und auch bei einem Waschvorgang zum großen Teil auf der Faser verbleiben. Häufig sind die an sich zufriedenstellenden antimikrobiellen Wirkstoffe aufgrund toxischer Effekte oder anderer Nachteile jedoch nur eingeschränkt für die Ausrüstung von Textilien geeignet. Beispielsweise können bei der Verarbeitung der Fasern auftretende Hautirritationen nachteilig sein, die darauf beruhen können, dass bei der Konfektion (z.B. Zuschneiden und Nähen) der antimikrobiel ausgerüsteten Textilien ein Hautkontakt auch bei solchen Textilien auftritt, die sonst während des vorgesehenen Gebrauchs nicht mit dem menschlichen Körper in Berührung kommen.

Bedingt durch das oben beschriebene Verflüchtigen der Wirkstoffe ist es häufig auch erforderlich, teilweise teure Wirkstoffe mit hohen minimalen Hemmkonzentrationswerten (MHK-Werten) in hoher Konzentration einzusetzen, um trotz der Wirkstoffverluste die gewünschte, den praktischen Anforderungen genügende antimikrobielle Wirkung zu erzielen, was erhebliche Kosten zur Folge hat. Weiterhin belasten die hohen Einsatzkonzentrationen und die hohen Verluste an antimikrobiellen Wirkstoff während Herstellung und Gebrauch dieser Produkte die Umwelt.

Es besteht daher ein ständiger Bedarf an der Entwicklung von anti-mikrobiellen Zubereitungen, die möglichst viele der folgenden Kriterien erfüllen:
- Sie sollen mit den üblichen Standardmethoden der Textilindustrie appliziert werden können,
- Sie sollen mit möglichst vielen anderen Textileffekten kombinierbar sein,
- Sie sollen möglichst gut waschbeständig sein, insbesondere auch bei Textilien aus Polyester oder Polyamid,
- Sie sollen möglichst wenig Einfluss auf den Griff von Textilien haben,
- Die antimikrobiellen Wirkstoffe sollen möglichst behördlich (z. B. unter EPA und unter BPD) notifiziert sein,
- Sie sollen einen konkurrenzfähigen Preis haben, d. h. einfach herstellbar sein;
- Die antimikrobiellen Wirkstoffe sollen dauerhaft verfügbar sein und sollten Umweltschonend einsetzbar sein.

Der Erfindung liegt daher als eine Aufgabe zugrunde, ein Verfahren und eine Zubereitung für die antimikrobielle Ausrüstung von Textilien bzw. Fasern zur Verfügung zu stellen, welche die vorstehend aufgeführten Nachteile weitgehend vermeiden. So sollen die Umweltbelastung und die Kosten der Ausrüstung des Textils gegen schädliche Mikroorganismen gesenkt werden. Die antimikrobielle Wirkung der zur Ausrüstung der Faser bzw. Textilien verwendeten Mikrobizide soll über einen möglichst langen Zeitraum gewährleistet bleiben.

Antimikrobielle Zubereitungen und ganz allgemein biozide Mittel werden bereits seit langem in vielen Bereichen des Alltags eingesetzt, beispielsweise zur Bekämpfung von schädlichen Bakterien, Pilzen oder Algen. Im Hinblick auf die stetig wachsenden Anforderungen an antimikrobielle Komponenten, zum Beispiel bezüglich Kosten-, Gesundheits- und Umweltschutzaspekten, ist eine Weiterentwicklung dieser bekannten Produkte erforderlich.

Seit Jahrhunderten ist es bekannt, dass Silber und Silberverbindungen eine keimtötende bzw. antimikrobielle Wirkung aufweisen können. Der Einsatz von Silberverbindungen als antimikrobielle Agenzien ist jedoch aus verschiedenen Gründen auf bestimmte Gebiete begrenzt. Silberpräparationen, die für Konservierungszwecke beschrieben wurden, sind z. B. elementares Silber in kolloidaler Form, Dispersionen nanopartikularen Silbers, Silberverbindungen wie Silberoxid oder anorganische und organische Silbersalze. Dabei können das Silber oder die Silberverbindungen auch in Trägermaterialien, wie z. B. Kieselsäuren, Titandioxid, Zeolithen oder Glas eingebettet sein.

Die Konservierung mittels Silber hat unter anderem den Nachteil, dass Silberverbindungen, insbesondere in Gegenwart von reduzierenden Verbindungen und bei Lichteinfluss, zu unerwünschten Verfärbungen führen können. Durch den Einsatz höherer Silber-Konzentrationen wird das Risiko einer Verfärbung verstärkt, was gerade im Bereich der Ausrüstung von Fasern und Textilien unerwünscht ist. Zudem sind silberhaltige Präparationen im Vergleich zu vielen anderen marktüblichen antimikrobiellen Formulierungen auch teuer, was ihren Einsatz in der Praxis deutlich limitiert.

Beispiele für gängige Einsatzgebiete von Silber als antimikrobielles Agens sind Beschichtungen für Haushaltsgeräte, der Bereich der Medizin und der Pharmazie sowie die Wasserbehandlung. Auch im Bereich der technischen Konservierung, z.B. bei Klebstoffen, Dichtstoffen, Beschichtungsstoffen und Kunststoffen, ist Silber bekannt. In der Patentanmeldung DE-A 103 46 387 wird beispielsweise Silber als mögliches Konservierungsmittel genannt. In diesem Dokument wird der Einsatz von Silber-haltigen Zubereitungen zur antimikrobiellen Ausrüstung von harten und weichen Oberflächen beschrieben. Auch wird der Einsatz von Silberionen oder Silber auf Trägern, in Lösungen und Dispersionen für die Behandlung von Textilien und anderen Materialien beschrieben.

Der vorliegenden Erfindung liegt als eine Aufgabe zugrunde, eine neue biozide Zusammensetzung enthaltend eine stabilisierte bzw. desensibilisierte Silber-Komponente bereitzustellen, die einen dauerhaften Schutz von Fasern und Textilien ermöglicht. Eine weitere Aufgabe liegt darin, die oben genannte antimikrobielle Komponente für ein Verfahren Ausrüstung von Fasern und Textilien einzusetzen. Durch den dauerhaften Schutz der Fasern bzw. Textilien soll auch die Umwelt weniger belastet sowie die Kosten der Bekämpfung schädlicher Mikroorganismen gesenkt werden.

Dabei können die Silberkomponente und die desensibilisierende Komponente vorzugsweise zusammen im Prinzip jedoch auch getrennt formuliert werden. Auch können die Komponenten gleichzeitig oder nach einander auf der Faser bzw. dem Textil aufgebracht werden.

Die o. g. Aufgabe wird erfindungsgemäß dadurch gelöst, dass ein Verfahren zum Ausrüsten von Fasern und/oder Textilien mit einer bioziden Wirkstoffstoffkomponente bereit gestellt wird, bei dem als biozide Wirkstoffkomponente eine durch eine Zusatzkomponente desensibilisierte Silberkomponente sowie gegebenenfalls ein oder mehrere weitere antimikrobielle Komponenten auf die Fasern bzw. Textilien aufgebracht werden.

Vorzugsweise wird dabei eine antimikrobielle Wirkstoffkomponente eingesetzt, die als Silber-komponente mindestens ein Silbersalz und als Zusatzkomponente mindestens eine organische, desensibilisierende Komponente enthält.

In einer weiteren Ausführungsform der Erfindung wird eine antimikrobielle Wirkstoftkomponente eingesetzt, die als Silberkomponente mindestens ein wasserunlösliches Silbersalz und als desensibilisierende Komponente mindestens ein Chinolin-Derivat enthält.

Unter Chinolin-Derivaten werden dabei insbesondere substituierte Chinolin-Verbindungen verstanden, die desensibilisierende Eigenschaften aufweisen. Als bevorzugter Vertreter dieser Gruppe wird die Verbindungen Pinakryptolgelb (6-Ethoxy-1-methyl-2-(3-nitro-ß-styryl)-chinolinium-methylsulfat; CAS 25910-85-4) eingesetzt. Als Chinolin-Derivat gelten jedoch auch Pinakryptolgrün (1,3,Diamino-5-phenyl-phenaziniumchlorid; CAS 19220-17-8) und Pinakryptolweiss. Pinakryptolgelb wird jedoch vorzugsweise eingesetzt.

In einer weiteren Ausführungsform der Erfindung wird eine antimikrobielle Wirkstoffkomponente eingesetzt, die als Silberkomponente mindestens ein wasserunlösliches Silbersalz und als desensibilisierende Komponente mindestens ein Chinolin-Derivat und/oder ein Benzotriazol-Derivat enthält.

Unter Benzotriazol-Derivaten werden dabei insbesondere die Verbindungen bzw. Salze der allgemeinen Formel (I) verstanden, 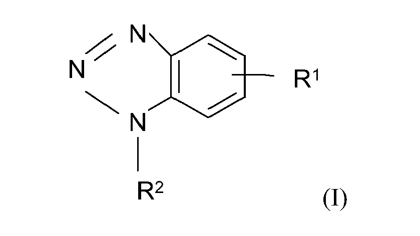 wobei R1 gleich Wasserstoff oder eine C1-C4-Alkylgruppe bedeutet,
und R2 gleich Wasserstoff oder ein Metall, vorzugsweise ein Alkalimetall ist.

Bevorzugt ist als Benzotriazol-Derivat das 1,2,3-Benzotriazol.
Statt des Benzotriazol-Derivats der Formel (I) könnte auch ein anderer UV-Stabilisator eingesetzt werden. Auch ist es möglich, die Chinolin-Verbindung in Kombination mit einem Benzotriazol-Derivat und einem weiteren UV-Stabilisator einzusetzen.

In einer weiteren Ausführungsform der Erfindung wird die Silberkomponente, bezogen auf das Gesamtgewicht der Fasern bzw. Textilien, in einer Menge von 0,0001 Gew.-% bis 0,5 Gew.-%, insbesondere 0,001 bis 0,05 Gew.%, eingesetzt.

Die erfindungsgemässen antimikrobiellen Zusammensetzungen enthalten die Silberkomponente (z.B. die Silberverbindungen) vorzugsweise in bestimmten Mengen. Dabei wird im Rahmen der vorliegenden Erfindung immer der Gehalt an Silber (Ag⁰) als Berechnungsgrundlage verwendet. Enthält eine erfindungsgemässe Zubereitung beispielsweise 100 mg Silberchlorid pro kg, so beträgt sein Silbergehalt 73,53 mg pro kg, in Gew.-% ausgedrückt also 0,007 Gew.-%.

Textilvor- oder Nachbehandlungsmittel, die in fester, flüssiger bzw. fliessfähiger Form, als Gel, Pulver, Granulat, Paste oder Spray vorliegen können, und ein erfindungsgemässe antimikrobielle Komponente enthalten, enthalten Silber (berechnet als Ag) vorzugsweise in Mengen von 0,00005 bis 5 Gew.-%, besonders bevorzugt von 0,0001 bis 0,5 Gew.-% und insbesondere von 0,001 bis 0,05 Gew.-%, bezogen auf das Mittel.

Das Chinolin-Derivat als desensibilisierende Komponente wird bevorzugt, bezogen auf das Gesamtgewicht der Fasern bzw. Textilien, in einer Menge von 0,1 ppm bis 500 ppm, insbesondere 1 ppm bis 150 ppm, eingesetzt.

Das Verhältnis zwischen Silberkomponente und desensibilisierender Komponente beträgt in der antimikrobiellen Zusammensetzung z. B. von 0,1 : 1 bis 1 : 500.

Eine besondere Ausführungsform der Erfindung ist dadurch gekennzeichnet, dass eine antimikrobielle Wirkstoftkomponente eingesetzt wird, die als Silberkomponente mindestens ein wasserunlösliches Silbersalz und als desensibilisierende Komponente mindestens ein Chinolin-Derivat und zusätzlich ein Benzotriazol-Derivat enthält. Der zusätzliche Einsatz von Benzotriazol ist insbesondere bei einigen Fasertypen von Vorteil.

Das Benzotriazol-Derivat wird bevorzugt bezogen auf das Gesamtgewicht der Fasern, bzw. Textilien, in einer Menge von 0,5 ppm bis 2500 ppm, insbesondere von 5 ppm bis 500 ppm, beispielsweise auch von 5 ppm bis 150 ppm eingesetzt.

Bei der wasserunlöslichen Silberkomponente kann es sich z. B. um ein oder mehrere Salze aus der Gruppe der Chloride, Bromide, Iodide, Sulfate und Tosylate handeln. Dabei ist der Begriff "wasserunlöslich" nicht so zu verstehen, dass keine Ionen in Lösung gehen, sondern derart, dass das Salz nur eine geringe Löslichkeit in Wasser aufweist.

Das Silbersalz wird in einer Ausführungsform der Erfindung in Situ gebildet, beispielsweise durch direkte Umsetzung eines löslichen Silbersalzes (wie Silbernitrat) mit einem anderen löslichen Salz (z. B. Kochsalz).

In einer weiteren Ausführungsform der Erfindung wird ein Verfahren angewandt, bei dem die desensibilisierende Komponente eine Kombination der Verbindungen Pinakryptolgelb und Benzotriazol ist. Diese Komponenten können als solche eingesetzt oder aber als Lösungen bzw. Dispersionen zusammen oder getrennt vorformuliert werden.

Bei dem erfindungsgemäßen Verfahren kann es sich z.B. um ein Foulardverfahren, Auszugsverfahren, Schaumauftragsverfahren, Beschichtungsverfahren oder Sprühverfahren handeln.

Die Erfindung betrifft auch die mit einer antimikrobiellen Wirkstoftkomponente ausgerüsteten Fasern bzw. Textilien, hergestellt nach einem der beschriebenen Verfahren. Bei den mit einer antimikrobiellen Wirkstoffkomponente ausgerüsteten Fasern bzw. Textilien kann es sich beispielsweise um Fasern bzw. Textilien handeln, die im Wesentlichen aus Baumwolle, Cellulose, Seide, Polyester, Polyamid oder anderen synthetischen oder natürlichen Fasern bestehen.

Bei den mit einer antimikrobiellen Wirkstoffkomponente ausgerüstete Textilien kann es sich vorzugsweise um gewebte Waren, gewirkte Waren, Vliese oder Garne handeln, aber auch andere Textilien können ausgerüstet werden.

Eine weitere Ausführungsform der Erfindung betrifft die Verwendung einer Zusammensetzung enthaltend eine durch einen Zusatz desensibilisierte Silberkomponente zum Schutz von Fasern und Textilien gegen einen Befall von Mikroorganismen. Auch die Zusammensetzung selbst ist Gegenstand der Erfindung, wobei diese Zusammensetzung die Komponenten bereits enthalten kann oder aber als "Kit von Komponenten" bereitgestellt werden kann.

Die erfindungsgemäße Zubereitung enthält beispielsweise (bezogen auf das Gesamtgewicht der Zubereitung) 0,01 % bis 10 %, insbesondere 0,1 % bis 3 % einer Silberkomponente und 0,001 % bis 2 %, insbesondere 0,01 % bis 0,5 % einer desensibilisierenden Komponente (z.B. der Verbindung Pinakryptolgelb). Die Zubereitung kann auch Lösungsmittel (wie Wasser und/oder Alkohole) und Hilfsstoffe (wie Tenside oder Netz- und Bindemittel) enthalten.

Insbesondere betrifft die Erfindung die Verwendung der o. g. Zusammensetzungen, wobei sie ein wasserunlösliches Silbersalz und als desensibilisierende Komponente mindestens ein Chinolin-Derivat und/oder ein Benzotriazol-Derivat enthalten, zum Schutz von Fasern und Textilien gegen einen Befall durch Bakterien, u a. gram-positive und gram-negative, Bakterien.

Es ist im Stand der Technik bekannt, dass Silber bzw. Silberionen eine blockierende Wirkung auf Thiol-Enzyme in Mikroorganismen ausüben und so eine hohe bakterizide Wirkung ausüben. Die Begriffe "antimikrobielle Wirkung" und "antimikrobieller Wirkstoff haben im Rahmen der erfindungsgemässen Lehre eine fachübliche Bedeutung, wie sie beispielsweise von K. H. Wallhäusser in "Praxis der Sterilisation, Desinfektion - Konservierung: Keimidentifizierung - Betriebshygiene" (5. Aufl. - Stuttgart; New York: Thieme, 1995) wiedergegeben wird.

Erfindungsgemäss wird die Silberkomponente vorzugsweise in Form seiner Verbindungen, beispielsweise in Form der o. g. Silbersalze eingesetzt. Erfindungsgemässe Zubereitungen können die Silberkomponente in Form verschiedener Partikelgrößen enthalten. Sie können die Silberteilchen (z. B. Silberchloridpartikel) z. B. mit Partikelgrössen von z. B. 0,001 bis 100 µm enthalten, beispielsweise auch von 0,04 bis 80 µm.

In einer besonders bevorzugten Ausführungsform handelt es sich bei der eingesetzten Silberkomponente um Nanopartikel mit Partikelgrössen von 0,001 bis 0,1 µm, vorzugsweise von 0,002 bis 0,05 µm und insbesondere von 0,004 bis 0,01 µm Die Partikel können hierbei auch ganz oder teilweise in kolloidaler Form vorliegen. Die antimikrobiellen Partikel können bereits vorformuliert in der Zubereitung enthalten sein oder frisch erzeugt werden.

Die Verarbeitbarkeit der Silberkomponente mit geringen Partikelgrössen kann dadurch verbessert werden, dass man die Silberkomponente auf Trägermaterialien aufbringt. Hierzu können geeignete Trägermaterialien beispielsweise mit kolloidalen Lösungen imprägniert oder mit feinteiligen Silberverbindungen vermischt werden. Es ist auch möglich, die Silberkomponente zusammen mit den Trägermaterialien unter Zugabe geeigneter Granulationshilfsmittel zu granulieren. Als Trägermaterialien sind insbesondere Gerüststoffe geeignet, beispielsweise Zeolithe. Daneben können auch hochporöse Stoffe wie Kieselsäuren, beispielsweise pyrogene Kieselsäuren, Bentonite, polymere Materialien oder Diatomeenerde ("Kieselgur") als Trägermaterialien dienen, ferner keramische, zum lonenaustausch befähigte Materialien, beispielsweise auf der Basis von Zirconiumphosphat, oder auch Gläser. Auch Aktivkohle, Apatit, Phosphate Aktivkohle, Aktiv-aluminiumoxid, Silicagel, Hydroxyapatit, Zirconphosphat, Titanphosphat, Kaliumtitanat, Antimonoxidhydrat, Wismutoxidhydrat, Zirconoxidhydrat und Hydrotalcit kommen im Prinzip in Frage.

Das Verfahren zum Aufbringen von Silberionen auf solche anorganischen Verbindungen ist nicht auf bestimmte Verfahren eingeschränkt. Es gibt verschiedene Verfahren zum Aufbringen, wie z. B. ein Verfahren durch physikalische oder chemische Adsorption, ein Verfahren durch Ionenaustauschreaktion, ein Verfahren durch Einsatz eines Binders, ein Verfahren durch Einbringen einer Silberverbindung in eine anorganische Verbindung und ein Verfahren durch Ausbildung einer dünnen Schicht der Silberverbindung auf der Oberfläche einer anorganischen Verbindung durch eine Technik zum Bilden einer dünnen Schicht, wie Dampfsedimentation, Auflösen und Fällen oder Sputtern.

Solche Kompositteilchen aus Trägermaterial und Silberkomponente können gegebenenfalls weitere Inhaltsstoffe aufweisen. Bewährt hat sich beispielsweise der Einsatz von aktivierenden Edelmetallen wie Gold, das die antimikrobielle Wirkung der Silberkomponente aktiviert.

Das beschriebene Verfahren zum Ausrüsten von Fasern und/oder Textilien mit einer antimikrobiellen Wirkstoffstoftkomponente, bei dem als antimikrobielle Wirkstoffkomponente eine durch eine Zusatzkomponente desensibilisierte Silberkomponente auf die Fasern bzw. Textilien aufgebracht wird, kann zur Herstellung von antimikrobiellen Fasern und Textilien eingesetzt werden. Die antimikrobielle Faser, die durch dieses Verfahren gewonnen wird, führt zu keiner unerwünschten Verfärbung.

Die antimikrobiell ausgerüsteten Fasern können als Ausgangsprodukt für diverse Materialien für verschiedene Faserprodukte wie Kleidung (z. B. Damenoberbekleidung, Herrenbekleidung, Kinderbekleidung, Sport- und Freizeitbekleidung, Berufsbekleidung, Socken, Strümpfe und Unterwäsche), Bettzeug (z. B. Bettbezug und Laken), Heimtextilien, Sitzbezüge, Polsterstoffe, Textilien für Schuhe, Duschvorhänge, Filter, Teppiche, Schutzartikel (z. B. Maske und Bandage) und ähnliches verwendet werden.

Eine mit einer antimikrobiellen Komponente ausgerüstete Faser (im folgenden als antimikrobielle Faser bezeichnet) wird ggf. im Laufe des Verfahrens verschiedenen Behandlungsschritten, wie Ziehen, Spülen, Färben, Bleichen, Mischfaserspinnen und Gewichtsverringern unterzogen, und sie wird mit verschiedenen Behandlungslösungen, wie z. B. Textilöl, wässriger Alkalilösung, Bleichmitteln und Detergents behandelt. Bei der Behandlung löst sich ein Teil der Silberionen, die in der antimikrobiellen Komponente enthalten sind, in den Behandlungslösungen oder reagiert mit verschiedenen Komponenten der Behandlungslösungen, wodurch die antimikrobielle Faser bei den klassischen Verfahren verfärbt werden kann.

Um antimikrobielle Zubereitungen vor dem Verfärben zu schützen, wurde bereits in der Literatur vorgeschlagen, einen Stabilisator einzusetzen. Beispielsweise enthalten in EP-A 02 880 63 beschriebene Stabilisatoren von antimikrobiellen Harzzusammensetzungen jeweils a) ein antimikrobielles Zeolith, das Silberionen trägt, und b) ein Harz, sowie c) Benzotriazolverbindungen, Oxalsäureanilidverbindungen, Salicylsäureverbindungen, gehinderte Aminverbindungen und/oder gehinderte Phenolverbindungen. Wenn diese Stabilisatoren zu einem Harz für die Faserherstellung hinzu gegeben werden und das Harz zu einer antimikrobiellen Faser versponnen wird, ist es jedoch später nicht möglich, die Verfärbung der antimikrobiellen Faser ausreichend zu unterdrücken.
Dies ist auch dann nicht realisierbar, wenn die antimikrobielle Faser mit verschiedenen Behandlungslösungen in den Behandlungsschritten behandelt wird, oder wenn die Spinnlösung, die für die Herstellung der antimikrobiellen Faser verwendet wird, eine grosse Lösungsmittelmenge enthält.

Daher bestand die Aufgabe darin, ein Herstellungsverfahren für eine antimikrobielle Faser zu entwickeln, das zu keiner Verfärbung in den verschiedenen Faserbehandlungsschritten führt.

Die vorliegende Erfindung stellt ein Verfahren zum Herstellen einer antimikrobiellen Faser bereit, wobei diese Faser während oder nach der Herstellung im wesentlichen keine Verfärbung, die durch den Einsatz der Behandlungslösungen oder allein durch die Spinnlösung hervorgerufen wird, erfährt.

Die in der vorliegenden Erfindung verwendete Basisfaser kann z.B. eine natürliche oder synthetische (chemische) Faser sein. Die natürliche Faser enthält vorzugsweise Pflanzenfasern, wie Baumwolle, Hanf, Flachs, Kokosnuss und Schilfrohr. Im Prinzip sind auch tierische Fasern, wie Ziegenhaar, Mohair, Cashmeer, Kamelhaar und Seide und mineralische Fasern mit dem Verfahren ausrüstbar.

Die chemischen Fasern sind beispielsweise Cellulosefasern, wie Viscosefaser, Proteinfasern, wie Kaseinfaser und Sojabohnenfaser, regenerierte, halbsynthetische Fasern, wie regeneriertes Seidegarn oder Alginatfaser. Als synthetische Fasern sind insbesondere ausrüstbar: Polyamidfaser, Polyesterfaser und deren Mischungen. Im Prinzip kann das erfindungsgemäße Verfahren auch angewendet werden auf Polypropylenfasern, Polyvinylfaser, Polyacrylfaser, Polyurethanfaser, Polyethylenfaser, Polyvinylidenfaser und Polystyrolfaser. Das Verfahren kann jedoch auch auf Mischfasern angewendet werden.

Für den antibakteriellen Einsatz in Textilien kann Silber in ionischer Form beispielsweise während der Spinnprozesses in Synthesefasern eingebracht werden. Solche Produkte werden bereits von verschiedenen Herstellern angeboten und basieren auf Silberverbindungen wie Salzen oder Silberoxid gebunden auf verschiedenen Trägermaterialien wie Titanoxid, Zinkoxid oder glasartige Träger und solche aus Keramik. Ebenfalls als Trägermaterial werden Ionentauscher und Zeolite eingesetzt.
Diese Produkte werden sehr oft in Form von Masterbatches angeboten, eine konzentrierte Form des Wirkstoffes in einem polymeren Träger, der mit dem Kunststoff des Endproduktes im gesamten Herstellungsprozess, beispielsweise der Faser, verträglich ist. Durch die Zwischenform des Masterbatchs wird die technische Verarbeitung erheblich erleichtert, da die Verdünnung vom reinen Wirkstoff auf die Konzentration im Endprodukt in mindestens zwei Schritten erfolgt. Zudem liegt der Wirkstoff in einer Form vor, in der er besser handhabbar ist und besser in den technischen Herstellungsprozess von Fasern integriert werden kann.

Bei der Einarbeitung von solchen Produkten gibt es jedoch technische Schwierigkeiten. So sollen die bioziden Komponenten von ihrer Konsistenz so beschaffen sein, dass sie beim Ausspinnen die Zahl der Fadenbrüche nicht erhöhen. Das kann beispielsweise mit der Auswahl der maximalen Größe, der Größenverteilung, der Geometrie der bioziden Teilchen und deren Benetzbarkeit mit dem Fasermaterial beeinflusst werden. Hier werden in der Praxis jedoch bei dünnen oder bei sehr dünnen Fasern, den Mikrofasern, schnell Grenzen erreicht, wenn die Wirkstoffe unter den Verarbeitungsbedingungen nicht schmelzen, was weder bei den Silberverbindungen noch von den oben genannten Trägern der Fall ist.

Ein weiterer kritischer Aspekt der antimikrobiellen Ausrüstung von Fasern ist die Abrasion der Fasern, die durch den Einsatz von antimikrobiellen Komponenten die Standzeiten der Spinnmaschine beeinträchtigen kann. Solche Silberkomponenten können auch die dem Spinnen nachfolgenden Ausrüstungsschritte beeinflussen, wie beispielsweise den Färbeprozess. Ferner hat die Flexibilität beim Spinnen der Fasern besondere Bedeutung. Es ist z. B. schwierig, mehrere Faserqualitäten bezüglich der eingebauten Eigenschaften handhaben zu können. Produktwechsel sind auf heute eingesetzten Anlagen häufig unwirtschaftlich und sollten deshalb, vermieden werden.

Die Dosierung von Additiven ist beim Spinnprozeß schwierig, da sowohl die reine Synthesefaser als auch Mischgarne und Mischgewebe aus dem primären Spinnprodukt hergestellt werden. Insbesondere dann, wenn Naturfasern als weitere Komponenten verwendet werden, sind die daraus hergestellten Textilien nur teilweise und somit ungenügend antimikrobiell geschützt.

Ebenfalls bekannt sind Beschichtungen aller Art von Textilien mit metallischem Silber oder der Einsatz von Garnen aus Silber oder Silber enthaltend.
Die Nachteile dieser technischen Lösungen sind u. a. die spezielle Verarbeitung, die Eigenfarbe der Textilien, das unterschiedliche Verhalten der Fasern bei Nachbehandlungen wie Färben, die Haptik solcher Textilien, die nicht gleichmäßige anti-mikrobielle Eigenschaften und der hohe Preis für diese Textilien.

Ein weiterer Aspekt der vorliegenden Erfindung ist die Ausrüstung von Textilien im so genannten "Finishing", dem Prozess, bei dem beim Textil Eigenschaften wie Haptik, Hydrophobie, Hydrophilie, Schmutzabweisung, Bügelverhalten, Vernähbarkeit, Schiebefestigkeit und weitere eingestellt werden. Hierzu gehören auch die Hygieneausrüstungen (beispielsweise für die antibakterielle Wirksamkeit). Der Vorteil, eine antibakterielle Hygieneausrüstung in diesem Schritt einzufügen, ist es, dass nur Textilien, bei denen eine entsprechende Ausrüstung gewünscht wird, auch so ausgerüstet werden. Es gibt somit keine Streueffekte, wie wenn die gesamte Produktion einer Spinnerei ausgerüstet werden müsste. Technisch ist es ein entscheidender Vorteil des o. g. Verfahrens, dass das gesamte Textil ausgerüstet wird und nicht nur ein Teil davon, z. B. ein bestimmter Fasertyp. Bei Ausrüstungen im "Finishing" gelangt die Ausrüstung dort hin, wo sie wirken soll, bei den antimikrobiellen Ausrüstungen normalerweise auf der Oberfläche.

Die Nachteile bei der antimikrobiellen Ausrüstung im "Finishing" sind die oft schlechte Haltbarkeit der Ausrüstungen beim Waschen. Dies geschieht, wenn Ausrüstungschemikalien nicht mit dem Textil reagieren können oder auf dem Textil durch Reaktion mit sich selbst oder anderen Bausteinen Makromoleküle bilden, die durch Vernetzung und/oder Masse dann permanent sind. Bei antimikrobiellen Komponenten sollte eine gewisse minimale Verfügbarkeit vorhanden sein, um überhaupt wirken zu können. Somit dürfen diese Wirkstoffe nicht vollständig an oder in der Faser gebunden sein. Dieses technische Erfordernis steht im Widerspruch zu dem Wunsch der Erreichbarkeit einer möglichst hohen Anzahl von Waschzyklen eines ausgerüsteten Artikels mit gleich bleibend guter antimikrobieller Wirkung.

Verschiedene antimikrobielle Komponenten auf der Basis von Silber (beziehungsweise Silberionen) gibt es bereits auf dem Markt. Das sind beispielsweise verschiedene Typen wie Nano Ag von dem Hersteller Air Products, Silpure von Thomson Research Associates, Dorafresh AG von Dohmen, diverse Typen JMAC von Clariant, Rucobac AGP von Rudolf Chemie.
Diesen Produkten ist jedoch gemeinsam, dass sie zusammen mit polymeren Bindern auf Textilien appliziert werden müssen, um eine gewisse Waschfestigkeit der Ausrüstung zu erhalten. Ein Grund ist, dass die Silbersalze auf einem Träger aufgezogen werden, und zusammen mit diesem Träger auf dem Textil fixiert werden müssen, da die Affinität dieser Teilchen ohne Fixierung nicht ausreicht um eine höhere Waschpermanenz zu erreichen.

Am Beispiel ALPHASAN des Herstellers Milliken (USA), einem Produkt mit Silberionen auf einem Ionentauscher, wird die Waschfestigkeit in US 6,821,936 aufgezeigt. Es wird dargestellt, dass, wenn das ALPHASAN ohne Binder appliziert wird, die antimikrobielle Wirksamkeit, geprüft nach AATCC 100-1993 gegen Staphylococcus aureus, bereits nach einer einzigen Wäsche, durchgeführt nach AATCC 130-1981, um über zwei Zehnerpotenzen gegenüber dem ungewaschenen Muster abnimmt. Wird das Produkt mit Binder zusammen appliziert, so können noch bis zu 10 Waschzyklen mit zum Teil guten antibakteriellen Ergebnissen erreicht werden.

Wird anstelle von ALPHASAN z. B. das Produkt AmpZ200 des Herstellers DuPont genommen, ein Produkt mit Titandioxid als Träger für die Silberionen, so ist die Waschbeständigkeit schwach. Noch stärker ist der Einbruch der antibakteriellen Wirkung mit dem Produkt ZEOMIC AJ 80H, ebenfalls beschrieben in US 6,821,936.

Eigene Tests mit Handelsprodukten haben gezeigt, dass einige der bekannten Produkte zur Verfärbung der damit ausgerüsteten und direkt dem Sonnenlicht exponierten Textilien neigen. Produkte auf der Basis von metallischem Silber sind zum Teil selbst schon dunkelgrau bis schwarz, was auf damit ausgerüsteten hellen oder gar weissen Textilien klar sichtbar ist.

Zur Stabilisierung gegen Verfärbung von Silbersalzen auf Textilien gibt es in der Literatur bereits mehrere Vorschläge. So wird in DE-A 43 39 374 der Einsatz von Benztriazol und Derivaten davon für die Stabilisierung von Silberverbindungen der allgemeinen Formel AgₚM¹_{q}M²₂(PO₄)₃ x n H₂O beschrieben, wobei M' aus der Gruppe Alkalimetallionen, Erdalkalimetallionen, Ammoniumion uns Wasserstoffion kommt und M² ein tetravalentes Metall aus der Gruppe Ti, Zr, und Sn kommt. Für p, das letztendlich für die Konzentration des Silberions steht, ist der beschriebene Bereich 0,01 bis 0,5. Zudem werden summarisch Silberionen auf einem anorganischen Ionentauscher als Wirkstoff beschrieben. Auf das Textil aufgebracht wird dieser Verfärbungsinhibitor im Spinnbad bei der Faserherstellung.

In JP 2003212993 (Chugai Shashin, veröffentlicht 30.07.2003) wird die Stabilisierung von Silberverbindungen gegen Verfärbungen (unter anderem auf Textilien für Bekleidung) durch den Einsatz von Copolymeren mit Hydroxylaminogruppen erzielt.

Eine Aufgabe der vorliegenden Erfindung ist es jedoch, eine Zusammensetzung auf Basis von Silberionen bereitzustellen, die auf Textilien mittels z. B. Foulardverfahren und Ausziehverfahren appliziert werden kann, wobei sich die Farbe, wenn das Textil dem Sonnenlicht ausgesetzt wird, nicht oder praktisch nicht verändert.

Dabei soll die Stabilisierung der antimikrobiellen Komponente im Prinzip auch ohne polymere oder copolymere Bindersysteme appliziert werden können. Ferner soll die Waschbeständigkeit mindestens 20 Waschzyklen betragen. Die Wäschen werden dabei nach der Norm EN ISO 6330 (6A) bei 40°C durchgeführt. Gewaschen wird dabei z.B. mit dem Farbechtheitswaschmittel ECE 77, geprüft über den antibakteriellen Effekt gegen Staphylococcus aureus (ATCC 6538) nach der Norm JISL 1902:2002 und/oder nach ASTM E 21-49.

Die Verbesserung der Waschfestigkeit wurde nachfolgend getestet, wobei zum Teil mit möglichst kleinen Silbersalzteilchen gearbeitet wird. Die Erfindung wird durch die nachfolgenden Beispiele näher erläutert. Dabei kommen auch einige handelsübliche Hilfsmittel zum Einsatz, unter anderem die folgenden:

| **Produkt** | **Zweck** | **Zusammensetzung/Beschreibung** |
|---|---|---|
| | | |
| Appretan N 92111 fl | Binder für weichen Griff | Acrylatcopolymerdispersion |
| Appretan TS fl | Griffmodifizierer | nichtionogene Polyvinylacetatdispersion |
| Appretan N52281 fl | erzeugt weichen, elastischen Griff | lösungsmittelfreie, anionische, aliphatische Polyesterpolyurethandispersion |
| Arkofix NES fl c | Extrem formaldehydarmer Vernetzer für die bügelarme oder bügelfreie Ausrüstung von Cellulosefasern | modifizierter Dimethyloldihydroxyetjhylen-harnstoff Derivat |
| Catalyst NKS fl | Katalysator für die Vernetzung von Reaktantvernetzern | Mischung aus Metallsalzen und organischen Säuren |
| Cassurit HML fl | Selbstvernetzendes Harz zur Permanenzsteigerung | hochveretherte N-Methoxymethylmelaminkomponente |
| Solusoft MW fl c | Hochkonzentriertes, nichtvergilbendes permanentes Silikonelastomer für die Weichmachung von allen Faserarten | nichtionogene Mikroemulsion aus modifiziertem Polysiloxan |
| NUVA HPC FL fl | Fluorcarbon für Hydrophobierung/Hydrophilier ung | Perfluoracrylatcopolymerisate |
| NUVA HPS FL fl | Fluorcarbon für Hydrophobierung/ Oleophobierung | Perfluoracrylatcopolymerisate |
| NUVA HPU FL fl | Fluorcarbon für Hydrophobierung/ Oleophobierung | Perfluoracylacrylatcopolymerisat |
| NUVA TTC FL | Fluorcarbon für Hydrophobierung/ Oleophobierung | Perfluoracrylat/Polyurethan-Dispersion |
| Pekoflam DPN 1 fl | Permanentes Flammschutzmittel für Baumwolle | nichtionogener Phosphorsäureester |
| Pekoflam HSD fl | Semipermanentes Flammschutzmittel | Gemisch aus Ammoniumpolyphosphat und Harnstoff |
| Pekoflam PES fl | Permanentes Flammschutzmittel für PES | Gemisch aus cyclischen Di- und Triphosphonaten |
| Hostapal MRN | Netzmittel | nichtionogenes Silicon- und Lösungsmittelfreies Netz-, Wasch- und Reinigungsmittel; Polyglyco letherderivat |
| Hostapal NRW | Netzmittel, Tensid, Dispergator | nichtionogener Polyglyco lether. |

### Beispiel 1

Es wurde versucht, Silberchlorid aus gelöstem Silbernitrat durch Zugabe einer Natriumchloridlösung direkt in einer Applikationslösung so zu fällen, dass die Silberchlorid-Teilchen klein genug sind, um auf dem Textil eine verbesserte Adhäsion zu erreichen, als mit einem Silberchlorid oder anderen Silbersalzen, die auf einem Trägermaterial direkt aufgebracht sind. Ein Vergleichsversuch wurde mit Silbernitrat ohne Fällung mit Kochsalzlösung durchgeführt.

Für Applikationen der nachstehend aufgeführten Beispiele wurden 7,87 g Silbernitrat in 100 ml de-ionisiertem Wasser gelöst. Diese Lösung wurde als Stammlösung eingesetzt und allein verdünnt oder verdünnt und mit weiteren Chemikalien versetzt. Dies erfolgte zum einen mit dem Ziel, die Verteilung von Silberchlorid auf dem Textil zu verbessern, zum anderen mit dem Ziel, das Silberchlorid besser auf dem Textil zu fixieren. Ferner erfolgte dies auch mit der Zielsetzung, stabilere Bäder für die Applikation zu erhalten.

Ausser bei Beispiel 2 wurde das Silberchlorid durch Zugabe einer 20%igen wässrigen Natriumchloridlösung aus den Applikationsbädern (in situ) gefällt.

3,3 g Silbernitratlösung (7,87 g Silbernitrat ad 100 g mit Wasser) werden in 243 g Wasser gelöst und unter Rühren mit 3,3 g Natriumchloridlösung (20 %ige wässrige NaCl-Lösung) versetzt. Dieses Bad, das sehr stark zum Trennen neigte, wird unmittelbar nach der Herstellung mittels Foulard auf ein Baumwollgewebe mit einem Flächengewicht von 198 g/m² appliziert. Der pick-up war 88%. Somit ergibt sich eine berechnete Konzentration von etwa 580 ppm Silberionen auf dem Textil. Das Gewebe wurde im Spannrahmen bei 120°C für zwei Minuten getrocknet.

### Beispiel 2

3,3 g Silbernitratlösung (7,87 g Silbernitrat ad 100 g mit Wasser) werden zu einer Lösung von 200 g Wasser gelöst und 5,0 g Komplexon III (Ethylendiamin-Tetraessigsäure-Dinatriumsalz) unter Rühren gegeben. Nacheinander werden dann 1,0 g Sandozin MRN (Netzmittel von Clariant), 17,5 g Appretan TT 50 (anionische, lösungsmittelfreie, aliphatische Polyesterpolyurethandispersion, Binder von Clariant, für einen weichen elastischen Griff des Textils) und dann 2,0 g Essigsäure (80%ig) zugegeben. Der pH-Wert der Flotte beträgt 6,4. Zum Schluss werden 21,2 g nochmals Wasser zugegeben.

Dieses Bad, das während der Applikation stabil ist, wurde wiederum mittels Foulard auf das gleiche Baumwollgewebe appliziert wie es im Beispiel 1 beschrieben ist. Der pick-up lag bei 76%. Somit ergibt sich eine berechnete Konzentration von etwa 500 ppm Silberionen auf dem Textil. Das Gewebe wurde im Spannrahmen bei 120°C während zwei Minuten getrocknet und anschliessend für 90 Sekunden bei 150°C kondensiert. Im Raumlicht verfärbt sich sowohl das Textil als auch das Bad.

**Beispiel 3**

| | |
|---|---|
| 220 g | Deionisiertes Wasser werden vorgelegt und unter Rühren werden |
| 5,0 g | Komplexon III darin gelöst und |
| 1,0 g | Sandozin NRW (Polyglycolether) als Netzmittel zugegeben. Als Binder wurden |
| 17,5 g | Appretan N 92111 (Acrylatcopolymerdispersion mit weichem Griff von Clariant) zugegeben und dann wurden |
| 3,3 g | Silbernitratlösung und anschliessend |
| 3,0 g | Kochsalzlösung unter Rühren zugesetzt. |

Dieses Bad, das während der Applikation stabil ist, wurde wiederum mittels Foulard auf das gleiche Baumwollgewebe wie es im Beispiel 1 beschrieben appliziert. Der pick-up lag bei 72%. Somit ergibt sich eine berechnete Konzentration von gerundet 475 ppm Silberionen auf dem Textil. Das Gewebe wurde im Spannrahmen bei 120°C für zwei Minuten getrocknet und anschliessend für 90 Sekunden bei 150°C kondensiert. Im Raumlicht verfärbt sich sowohl das Textil als auch das Bad.

### Beispiele 4 und 5

Diese Beispiele wurden analog dem Beispiel 3 durchgeführt, aber anstelle des Appretan N 92111 wurde das Produkt Appretan TT 50 beziehungsweise der Vernetzer Arkofix NDF zusammen mit dem Katalysator Catalyst NKS eingesetzt.

Fast alle Muster verfärbten sich innerhalb weniger Minuten bis zu einigen Stunden am Tageslicht sogar im Raum und hinter Fensterglas. Das Muster aus Beispiel 1 brauchte zur Verfärbung mehrere Stunden. Auch die Flotten verfärbten sich schnell, so fiel an den Wänden der Gefässe, die zur Aufbewahrung genommen wurden, Silber aus.

Die Verfärbungen der Textilmuster waren in den Farbtönen orange, aubergine bis hin zu violett und nicht (wie eigentlich erwartet) schwarz, wie es von metallischem fein verteiltem Silber bekannt ist. Es ist bekannt, dass extrem fein verteiltes metallisches Silber (mit Nano-Partikeln) nicht mehr schwarz ist sondern den o. g. Farben entspricht.

Mit den Mustern wurden ungeachtet der starken Verfärbung, die für die Praxis (ausser für sehr dunkle Artikel oder für Artikel, die im Gebrauch nicht gesehen werden, wie beispielsweise Fasern oder Fliese für Füllmaterial) nicht akzeptabel ist, die Waschversuche mit bis zu 20 Zyklen wie oben beschrieben durchgeführt.

Mit den gewaschenen Mustern wurden dann die mikrobiologischen Prüfungen durchgeführt. Diese Tests waren positiv. Die Reduktion der Keimzahl, geprüft nach der japanischen Keimzählungsmethode JISL 1902:2002 gegen Staphylococcus aureus (ATCC 6538) betrug auch nach 20 Wäschen mindestens zwei Zehnerpotenzen. Dieses Ergebnis wurde bei allen Ausrüstungen mit und ohne Binder beziehungsweise Vernetzer erreicht.

Die Resultate waren somit bereits besser bzw. vergleichbar zu den Werten, die in US 6,821,936 (Milliken & Company; 2004) nach nur einer Wäsche beschrieben werden.

### Beispiel 6:

Eine längere Zeit andauernde Verhinderung der Verfärbung von gefälltem Silberchlorid kann beispielsweise durch den Einsatz der nachfolgend beschriebenen Komponenten erreicht werden.

Das "frisch gefällte Silberchlorid" ist so lichtstabil, dass es auf einem Träger appliziert werden kann und sich die damit ausgerüstete Ware weder im ungewaschenen noch im gewaschenen Zustand sofort im Sonnenlicht verfärbt. Die Verfärbung entsteht jedoch nach einem bestimmten Zeitraum durch die Reduktion der Silberionen zu elementarem Silber durch Lichteinwirkung. Es wurde gefunden, dass durch den Einsatz desensibilisierter Silbersalze eine dauerhafte Verfärbung verhindert oder zumindest stark vermindert werden kann.

In der Fotografie werden für die Desensibilisierung z. B. folgende Stoffe eingesetzt:
a) Ammonium-hexachlororhodat(III), CAS-Nummer: 15336-18-2,
b) Pinakryptolfarbstoffe wie Pinakryptolgrün oder Pinakryptolweiss, oder
c) Pinakryptolgelb, IUPAC: 6-Ethoxy-1-methyl-2-(3-nitro-β-styryl)-chinolinum-methylsulfat mit der Summenformel C₂₁H₂₂N₂O₇S, der relativen Molekularmasse 446,47 g/mol und der CAS-Nummer: 25910-85-4. In der Fotografie werden Fotoemulsionen ferner auch mit Gelatine hergestellt.

### Gemäß dem Beispiel werden

| | |
|---|---|
| 1,57 g | Silbernitrat in |
| 45 g | 1%ige Gelatinelösung (Schweinegelatine gelöst in heissem deionisiertem Wasser) gelöst. |
| 50 g | Appretan N 92111 (einen weichen Film bildendes Acrylatcopolymer von Clariant) werden zugegeben. |
| 2,0 g | bei ca. 20°C gesättigte Lösung von Pinacryptolgelb in Wasser und |
| 2,0 g | 20%ige Natriumchloridlösung werden unter Rühren zugegeben. |

### Beispiel 7:

| | |
|---|---|
| 84,4 g | 1%ige Gelatinelösung (Schweinegelatine gelöst in heissem deionisiertem Wasser) werden vorgelegt, mit |
| 1,57 g | Silbernitrat und |
| 5,0 g | bei ca. 20°C gesättigte Lösung von Pinacryptolgelb in Wasser und |
| 5,0 g | Imbentin C 125/55/90 (einem ethoxylierten C-12/15-Fettalkohol mit der CAS-Nummer 68131-39-5 von Kolb, Hedingen), |
| 5,0 g | bei ca. 20°C gesättigte Lösung von Pinacryptolgelb in Wasser und |
| 3,0 g | 20%ige Natriumchloridlösung und anschliessend |
| 1,0 g | Essigsäure 80% werden unter Rühren zugegeben. |

Die dispersen und gelben Produkte wurden mittels eines Foulardverfahren auf Gewebe aus Baumwolle mit einem Flächengewicht von 198 g/m² aufgebracht. Das Produkt aus Beispiel 6 wird auf ein Gewebe aus Polyester mit einem Flächengewicht von 220 g/m² appliziert.
Dabei wurde vom Produkt aus Beispiel 6 eine Applikationsflotte mit 20 g/l des Produktes hergestellt und mittels Foulardverfahren auf das Gewebe aus Polyester appliziert. Beim pick-up von 40% wurde eine Konzentration des Produktes aus Beispiel 6 von 0,8% erreicht.

Das Produkt aus Beispiel 7 wurde auf das Gewebe aus Baumwolle appliziert. Dabei wurden die Applikationslösungen mit 15 bis 16 g/l aus dem Produkt aus Beispiel 6 und 0,7 bis 1,4 g/l des Netzmittels Sandozin NRW, ohne weitere Textilchemikalien und zusammen mit 70 g/l Appretan TT 50 beziehungsweise Appretan N92111 auf das Baumwollgewebe appliziert.

Der pick-up betrug dabei zwischen 76 und 80%, so dass jeweils 1% des Silberchlorid enthaltenden Produktes aufgetragen worden sind. Die Textilien wurden bei 140°C getrocknet.

Diese Textilmuster wurden anschließend für eine Woche im Freien aufgehängt. Alle Muster zeigten rosa-gefärbte Flecken und zum Teil eine rötliche Verfärbung des gesamten Musters. Dennoch wurden die Muster 20 mal gewaschen und anschliessend auf ihre antibakterielle Wirksamkeit hin geprüft. Das Muster aus Polyester zeigte eine recht bescheidene Reduktion der Keimzahl während die Muster aus Baumwolle ohne Binder eine Reduktion von 2,5 Zehnerpotenzen und die Muster mit den Bindern jeweils eine Reduktion von über vier Zehnerpotenzen in der Prüfung nach JISL 1902:2002 gegen Staphylococcus aureus ATCC 6538 zeigten.

Die Produkte aus den Beispielen verfärbten sich in den Glasflaschen innerhalb kürzester Zeit ebenfalls. Die Stabilisierung war somit noch nicht genügend. Ebenfalls ungenügend war die Stabilität der Produkte selbst, da sie sich zu schnell abtrennten.

### Beispiel 8

Bei den folgenden Versuchen wurde die Menge an Gelatine bis auf 2% und die Menge der Pinacryptolgelb-Lösung deutlich, bis auf 10% (bei 20°C gesättigte Lösung) erhöht. Die Lichtstabilität sowohl der Textilien als auch der Versuchsprodukte wurde besser, war aber noch nicht befriedigend. Die Absetzgeschwindigkeit der dispergierten Teile in den Produkten war zu hoch.

Zur weiteren Verbesserung der Fotodesensibilisierung wurde die Konzentration des Pinakryptolgelbs bis auf 0,1% der Gesamtmenge der Formulierung erhöht, zudem wurde als zusätzlicher Stabilisator die Verbindung Benzotriazol (CAS-Nummer 95-14-7) eingesetzt. Neben Gelatine wurden auch weitere Produkte als Verdickungsmittel für die Formulierung getestet. So wurde beispielsweise Stabilize QM, Carboxy-methylcellulose (CMC) getestet, die mit Silbernitrat sichtbar reagiert, nicht aber mit gefälltem Silberchlorid, mit dem die Herstellung einer Formulierung mit CMC als Verdicker funktioniert. Getestet wurden auch Bentone EW, Copolymere Binder von Clariant wie Appreatan N92111, Appretan TS, einer wässrigen Polyvinylacetatdispersion und Appretan TT 50.

Neben dem Einsatz des Chinolin-Derivats Pinakryptolgelb als Stabilisator allein und zusammen mit dem Benzotriazol wurde auch nur Benzotriazol bis zu Mengen von 5 g/g Silberionen und auch Hydroxylamin-hydrochlorid (CAS-Nummer: 5470-11-1), bis zu Mengen von 3 g/g Silberionen geprüft.

Die beiden Verbindungen Benzotriazol und Hydrocylamin können in der eingesetzten Konzentration aber weder die Verfärbung der Formulierung selbst noch der Verfärbung des Textils durch die applizierte Formulierung auf Dauer unterdrücken. Ebenfalls weniger gute Ergebnisse wurden erreicht, wenn die Konzentration des Pinakyptolgelbs z. B. auf unter 0,025 % gesenkt wurde, unabhängig davon, ob Benzotriazol in der Formulierung mit eingesetzt war oder nicht.

### Es wurden im nachfolgenden Versuch

| | |
|---|---|
| 930 g | Wasser deionisiert, |
| 1,0 g | Pinakryptolgelb unter Rühren zugeben und so weit wie möglich gelöst. |
| 16,0 g | Silbernitrat zugeben, kurz bei Raumtemperatur nachrühren und dann unter Rühren |
| 35,0 g | Natriumchloridlösung, hergestellt aus 20 g Natriumchlorid mit einem Gehalt von < 0,001% höherer Halogeniden das in 80 g deionisiertem Wasser gelöst wird, zugeben. Zu der gelben, feinen Dispersion werden |
| 4,0 g | Rhodopol 23, ein Heteropolysaccarid, CAS-Nummer: 11138-66-2 und |
| 14,0 g | Veegum F, kolloidales Magnesium-Alluminiumsilikat der R.T. Vanderbilt Company, Inc. zugegeben. |

Mit einem Mixer (Dissolver) wurde die Mischung während 30 Minuten dispergiert. Es entsteht eine gelbe, niederviskose, bei Raumtemperatur stabile Dispersion.

Mit dieser Formulierung wurden Applikationen mittels Foulardverfahren auf Gewebe aus Baumwolle, Polyamid und Polyester so durchgeführt, dass 1 % der Formulierung (bezogen auf das Textilgewicht) appliziert wurden. Diese Muster wurden direkt im Tageslicht während drei Tagen exponiert. Das Muster aus Polyamid zeigte eine äusserst schwache Rosafärbung, die anderen Gewebe zeigten keine Verfärbung.

Zur Verbesserung der Stabilität der Dispersion und zur Verbesserung der Einarbeitbarkeit der Formulierung in das Applikationsbad wurde als weiteres Lösungsmittel neben Wasser eine geringe Menge Propylenglycol in die Formulierung eingesetzt. An Stelle von Propylenglycol könnten auch andere Alkohole oder handelsübliche Netzmittel oder Tenside allein oder in Mischung eingesetzt werden. Zur weiteren Verbesserung der Lichtechtheit sowohl des Produktes selbst, aber vor allem des applizierten Produktes wurde neben dem Chinolin-Derivat Pinakryptolgelb auch noch Benzotriazol eingesetzt. Diese Massnahmen erwiesen sich zwar nicht als unabdingbar, verbessern aber die Einsetzbarkeit und Stabilität des Produktes. Es wird für die Applikation mehr Sicherheit gewonnen.

### Beispiel 9

Das Beispiel 9 beschreibt die Herstellung einer für die technische Produktion geeigneten Formulierung.

### Es wurden

| | |
|---|---|
| 84,3 kg | Wasser deionisiert in einem oben offenen Stahlbehälter vorlegen. |
| 100 g | Pinakryptolgelb unter Rühren mit dem Dissolver zugeben. 15 Minuten bei 600 rpm soweit möglich lösen und den Rest dispergieren. |
| 500 g | Benzotriazol zugeben und weitere fünf Minuten mit dem Dissolver bearbeiten. |
| 1600 g | Silbernitrat zugeben, 5 Minuten bei Raumtemperatur mit dem Dissolver nachrühren und dann wird innert ca. zwei Minuten eine Lösung aus |
| 700 g | Natriumchlorid in |
| 2,8 kg | Wasser deionisiert zugegeben. Nach weiteren fünf Minuten am Dissolver werden in die gelbe, feine Dispersion nacheinander |
| 400 g | Rhodopol 23, ein Heteropolysaccarid, CAS-Nummer: 11138-66-2 und |
| 1400 g | Veegum F, kolloidales Magnesium-Alluminiumsilikat der R.T. Vanderbilt Company, Inc. eingestreut. |
| 8,2 kg | Propylenglycol werden zugegeben. |

Mit einem Dissolver wurde die Mischung während 30 Minuten mit 1000 rpm dispergiert. Es entsteht eine gelbe, niederviskose, sehr gut abfüllbare, stabile Dispersion.

Mit der Formulierung aus Beispiel 9 wurden verschiedene Applikationen durchgeführt. Bei den Applikationen mit Foulardverfahren wurde jeweils das Wasser vorgelegt, das Netzmittel zugegeben. Das Netzmittel dient dazu, dass die Benetzungsstrecke im Foulard möglichst kurz ist, erweist sich jedoch nicht als notwendig. Es wurde z. B. Sandozin MRN fl. eingesetzt.

Als Säure wurde Essigsäure eingesetzt, so dass die Applikationen im schwach sauren Bereich durchgeführt wurden, was einem Standard der Textilindustrie entspricht, aber für die beschriebene Formulierung ebenfalls nicht zwingend notwendig ist. Zum Teil wurden zusätzliche Textilchemikalien für andere Textileffekte in die Flotte gegeben, wie z.B. polymere Binder, Vernetzer, Weichmacher und Fluorcarbone. Zu dieser wässrigen Flotte wurde dann die Formulierung, die wie oben beschrieben hergestellt worden ist, jeweils als letzte Komponente eingerührt. Diese Flotten wurden mit einem Foulard auf die auszurüstenden Textilien vollkommen standardmässig appliziert. Auf einem Spannrahmen wurden die Muster getrocknet und zum Teil kondensiert, wobei die erfindungsgemässen Formulierungen selbst keiner Kondensation bedürfen. Kondensation kann aber erforderlich sein für die Vernetzung und/oder Fixierung der anderen Textilchemikalien bei den einzelnen Ausrüstungen und geht aus der technischen Produktdokumentation für die jeweiligen Produkte hervor.

Die solchermassen ausgerüsteten Textilien wurden mit und ohne Vorbehandlung auf ihre antibakterielle Wirkung gegen Staphylococcus aureus ATCC 6538 geprüft. Diese Prüfungen wurden nach den Normen JISL 1902:2002 beziehungsweise nach ASTM E 21-49 durchgeführt.

Als Resultate werden bei beiden Prüfungen die dekadische logarithmische Reduktion der Keimzahl nach 18 Stunden Inkubation angegeben. Die Reduktion bezieht sich dabei auf die Keimzahl des Inokulums, beziehungsweise gegenüber einem Kontrollmuster nach 18 Stunden Inkubation. Ausgezählt wird die Keimzahl nach dem Ausplatten der Verdünnungsreihe und anschliessender Inkubation der Platten.

Eine sehr gute antibakterielle Wirkung zeigt Werte 2 und grösser,
befriedigend ist die Reduktion mit dem Wert 1,5 und grösser bis 2.
Kleinere Werte sind bei ausgerüsteten Mustern unbefriedigend
und kommen in den Streubereich der beiden Prüfmethoden.

Vorbehandelt wurden die Textilien durch Sonnenlicht, erreicht durch Aussenexposition der Prüfmuster. Dazu wurden die Muster im Freien unter einem Vordach aufgehängt und jeweils visuell beurteilt. Die Muster wurden nach einer verschiedener Anzahl an Waschzyklen (nach EN ISO 6330 (6A) bei 40°C, durchgeführt mit dem Farbechtheitswaschmittel ECE 77) geprüft, zum Teil wurden die Muster nach den Wäschen dabei dem Tageslicht ausgesetzt.

Die eingesetzten Textilien waren jeweils Gewebe aus Baumwolle mit einem Flächengewicht von 198 g/m², Polyamid Jersey mit einem Flächengewicht von 160 g/m² und Polyester von Trevira mit einem Flächengewicht von 220 g/m², beziehungsweise ein Dacron 54 spun mit 120 g/m², beziehungsweise der Artikel 9046 von Tersuisse mit einem Flächengewicht von 230 g/m² und dem Artikel 1880 von Interlock mit einem Flächengewicht von 160 g/m².

Die nachstehenden Resultate zeigen, dass die Resultate nicht von dem eingesetzten Typ Polyester abhängen.

### Beispiele 10 bis 15:

| Beispiel | 10 | 11 |
|---|---|---|
| Muster Rezeptur | Baumwolle, Gabardine, 200 g/m² | Baumwolle, Gabardine, 200 g/m² |
| Sandozin MRN fl [g/l] | 1 | 1 |
| Appretan N 92111 [g/l] | --- | 70 |
| Formulierung nach Beispiel 9 [g/l] | 15 | 15 |
| pH mit Essigsäure eingestellt auf | 4,5 | 4,5 |
| | | |
| Daten Applikation (Foulard; Spannrahmen) | | |
| Pick-up (g Flottenaufnahme: g trockenes Textil) | 0,71 | 0,71 |
| Trocknungsbedingungen [°C; s] | 120; 120 | 120; 120 |
| Kondensationsbedingungen [°C; s] | --- | 160; 90 |
| Konzentration Formulierung Beispiel 9 [%] | 1 | 1 |
| | | |
| Prüfungen nach Vorbehandlung des Musters | Log Keimzahlreduktion von Staphylococcus aureus ATCC 6538 nach JISL 1902:2002 | |
| Originalzustand, (ungewaschen, unbelichtet) | > 4,9 | > 4,9 |
| 30 Wäschen bei 40°C, 4 Tage belichtet | >4,9 | > 4,9 |
| 50 Wäschen bei 40°C, 4 Tage belichtet | 2,5 | > 5,3 |
| | | |
| | Visuelle Bewertung jeweils nach 4 Tagen Tageslichtexposition nach der jeweils | |

| | angegebenen Zahl Wäschen | |
|---|---|---|
| ungewaschen, sofort | keine Verfärbung | keine Verfärbung |
| ungewaschen, nach 4 Tagen Sonnenlicht (SL) | keine Verfärbung | keine Verfärbung |
| 1 Wäsche, nach 4 Tagen SL | keine Verfärbung | keine Verfärbung |
| 2 Wäschen, nach 4 Tagen SL | keine Verfärbung | keine Verfärbung |
| 3 Wäschen, nach 4 Tagen SL | keine Verfärbung | keine Verfärbung |
| 10 Wäschen, nach 4 Tagen SL | keine Verfärbung | keine Verfärbung |
| 20 Wäschen, nach 4 Tagen SL | keine Verfärbung | keine Verfärbung |
| 30 Wäschen, nach 4 Tagen SL | keine Verfärbung | keine Verfärbung |

| Beispiel | 12 | 13 |
|---|---|---|
| Muster Rezeptur | Polyester Trevira 220 g/m² | Polyester Trevira 220 g/m² |
| Sandozin MRN fl [g/l] | 1 | 1 |
| Appretan N 92111 [g/l] | --- | 120 |
| Formulierung nach Beispiel 9 [g/l] | 35 | 35 |
| pH mit Essigsäure eingestellt auf | 4,2 | 4,2 |
| | | |
| Daten Applikation (Foulard; Spannrahmen) | | |
| Pick-up (g Flottenaufnahme : g trockenes Textil) | 0,30 | 0,30 |
| Trocknungsbedingungen [°C; s] | 120; 120 | 120; 120 |
| Kondensationsbedingungen [°C; s] | --- | 160; 90 |
| Konzentration Formulierung Beispiel 9 [%] | 1 | 1 |
| | | |
| Prüfungen nach Vorbehandlung des Musters | Log Keimzahlreduktion von Staphylococcus aureus ATCC 6538 nach JISL 1902:2002 | |
| Originalzustand, (ungewaschen, unbelichtet) | >4,9 | >4,9 |
| 30 Wäschen bei 40°C, belichtet | 2,4 | 3,1 |
| 50 Wäschen bei 40°C, belichtet | - 0,2 | 2,5 |
| | | |
| | Visuelle Bewertung jeweils nach 4 Tagen Tageslichtexposition nach der jeweils angegebenen Zahl Wäschen | |
| ungewaschen, sofort | keine Verfärbung | keine Verfärbung |
| ungewaschen, nach 4 Tagen Sonnenlicht (SL) | keine Verfärbung | keine Verfärbung |
| 1 Wäsche, nach 4 Tagen SL | keine Verfärbung | keine Verfärbung |
| 2 Wäschen, nach 4 Tagen SL | keine Verfärbung | keine Verfärbung |
| 3 Wäschen, nach 4 Tagen SL | keine Verfärbung | keine Verfärbung |
| 10 Wäschen, nach 4 Tagen SL | keine Verfärbung | keine Verfärbung |
| 20 Wäschen, nach 4 Tagen SL | keine Verfärbung | keine Verfärbung |
| 30 Wäschen, nach 4 Tagen SL | keine Verfärbung | keine Verfärbung |

| Beispiel | 14 | 15 |
|---|---|---|
| Muster Muster | Polyamid Jersey | Polyamid Jersey |
| Rezeptur | 160 g/m² | 160 g/m² |
| Sandozin MRN fl [g/l] | 1 | 1 |
| Appretan N 92111 [g/l] | --- | 70 |
| Formulierung nach Beispiel 9 [g/l] | 14 | 14 |
| pH mit Essigsäure eingestellt auf | 4,1 | 4,4 |
| | | |
| Daten Applikation (Foulard; Spannrahmen) | | |
| Pick-up (g Flottenaufnahme : g trockenes Textil) | 0,82 | 0,82 |
| Trocknungsbedingungen [°C; s] | 120;120 | 120;120 |
| Kondensationsbedingungen [°C; s] | --- | 160; 90 |
| Konzentration Formulierung Beispiel 9 [%] | 1,1 | 1,1 |
| | | |
| Prüfungen nach Vorbehandlung des Musters | Log Keimzahlreduktion von Staphylococcus aureus ATCC 6538 nach JISL 1902:2002 | |
| Originalzustand, (ungewaschen, unbelichtet) | 3,1 | > 4,9 |
| 30 Wäschen bei 40°C, belichtet | 3,3 | nicht geprüft |
| 50 Wäschen bei 40°C, belichtet | 3,6 | >5,3 |
| | | |
| | Visuelle Bewertung jeweils nach 4 Tagen Tageslichtexposition nach der jeweils angegebenen Zahl Wäschen | |
| ungewaschen, sofort | keine Verfärbung | keine Verfärbung |
| ungewaschen, nach 4 Tagen Sonnenlicht (SL) | keine Verfärbung | keine Verfärbung |
| 1 Wäsche, nach 4 Tagen SL | keine Verfärbung | keine Verfärbung |
| 2 Wäschen, nach 4 Tagen SL | keine Verfärbung | keine Verfärbung |
| 3 Wäschen, nach 4 Tagen SL | keine Verfärbung | keine Verfärbung |
| 10 Wäschen, nach 4 Tagen SL | keine Verfärbung | keine Verfärbung |
| 20 Wäschen, nach 4 Tagen SL | keine Verfärbung | keine Verfärbung |
| 30 Wäschen, nach 4 Tagen SL | keine Verfärbung | keine Verfärbung |

Typische Beispiele zur Verwendung von Textilien, die wie oben beschrieben ausgerüstet worden sind, sind Bekleidungstextilien, insbesondere Arbeitsbekleidung, Uniformen und vor allem Freizeit- und Sportbekleidung, Bettwaren, textile Tapeten, Sitzbezüge, Polstermöbel und Teppiche, Tischtücher, Stoffe für Schirme, Heimtextilien wie Putztücher, Wischmopps, Handtücher, alle Artikel aus Frottee sowie textile Spielsachen.

### Beispiele 16 bis 20

Analog zu Beispiel 10 wurde Baumwollgewebe mit 0,3, 0,4, 0,5, 0,6 und 0,8% der Formulierung aus Beispiel 9 ausgerüstet. Der Unterschied war dabei, dass der pH nicht eingestellt wurde, sondern es wurde jeweils 1 g/l an 80%iger Essigsäure zugegeben.

Die Prüfungen gegen Staphylococcus aureus ATCC 6338 wurden nach 30 Wäschen nach EN ISO 6330 (6A) bei 40°C durchgeführt. Die Ergebnisse der Log Keimreduktion waren in der üblichen Schwankungsbreite der Methode im Bereich 2,6 bis 3,8 und somit ausgezeichnet, selbst bei deutlich tieferen Einsatzkonzentrationen an Silberionen als in den vorhergehenden Beispielen, wo die Konzentration jeweils rund 100 ppm Silberionen bezogen auf die Masse des ausgerüsteten Textils betrug.

### Beispiele 21 bis 25

Analog zu Beispiel 11 wurde Baumwollgewebe mit 0,3, 0,4, 0,5, 0,6 und 0,8% der Formulierung aus Beispiel 9 ausgerüstet.
Der Unterschied war dabei, dass der pH nicht eingestellt wurde, sondern es wurde jeweils 1 g/l 80%ige Essigsäure zugegeben. Die Menge des Binders Appretan N 92111 beliess man konstant bei 70 g/l. Die Prüfungen gegen Staphylococcus aureus ATCC 6338 wurden nach 30 Wäschen nach EN ISO 6330 (6A) bei 40°C durchgeführt. Die Ergebnisse der Log Keimreduktion waren in der üblichen Schwankungsbreite der Methode im Bereich 3,2 bis >4,9 und somit ausgezeichnet. Auch mit dem gewählten Binder bei Einsatzkonzentrationen von 30 bis 80 ppm Silberionen, berechnet aus der Einsatzkonzentration und dem Pick-up, wurden gute Ergebnisse erzielt.

### Beispiele 26 bis 31

Analog Beispiel 12 wurde Gewebe aus Polyester mit 0,3, 0,4, 0,5, 0,6 und 0,8% der Formulierung aus Beispiel 9 ausgerüstet. Der Unterschied war, dass der pH nicht eingestellt worden ist, sondern es wurde jeweils 1 g/l 80%ige Essigsäure zugegeben. Die Prüfungen gegen Staphylococcus aureus ATCC 6338 wurden nach 20 und 30 Wäschen nach EN ISO 6330 (6A) bei 40°C durchgeführt. Kein Muster erreichte ein gutes Resultat nach 30 Waschzyklen. Nach 20 Waschzyklen waren die Ergebnisse der Log Keimreduktion in der üblichen Schwankungsbreite der Methode, aber bereits mit 0,3% der Formulierung aus Beispiel 9 gerade 2,2 und bei 0,4% der Formulierung sogar 2,6.

Diese Ergebnisse sind hervorragende Resultate auf Polyestergewebe von einem Produkt auf Basis von Silbersalz und ohne Binder in der Nachausrüstung appliziert.

### Beispiele 32 bis 36

Analog zu Beispiel 13 wurde Gewebe aus Polyester mit 0,3, 0,4, 0,5, 0,6 und 0,8% der Formulierung aus Beispiel 9 ausgerüstet. Der Unterschied war, dass der pH nicht eingestellt worden ist, sondern es wurde jeweils 1 g/l 80%ige Essigsäure zugegeben. Die Menge des Binders Appretan N 92111 beliess man konstant bei 120 g/l. Die Prüfungen gegen Staphylococcus aureus ATCC 6338 wurden nach 30 Wäschen nach EN ISO 6330 (6A) bei 40°C durchgeführt. Die Ergebnisse der Log Keimreduktion waren in der üblichen Schwankungsbreite der Methode aber Werte von mindestens 3,0 sind erreicht worden.

### Beispiele 37 bis 41

Analog zu Beispiel 14 wurde Gewebe aus Polyamid Jersey mit 0,3, 0,4, 0,5, 0,6 und 0,8% der Formulierung aus Beispiel 9 ausgerüstet. Der Unterschied war, dass der pH nicht eingestellt worden ist, sondern es wurde jeweils 1 g/l 80%ige Essigsäure zugegeben. Die Prüfungen gegen Staphylococcus aureus ATCC 6338 wurden nach 20 Wäschen nach EN ISO 6330 (6A) bei 40°C durchgeführt. Die Muster erreichten jedoch die gewünschten Werte der Keimreduktion nicht.

### Beispiele 42 bis 46

Analog zu Beispiel 14 wurde Gewebe aus Polyamid Jersey mit 0,3, 0,4, 0,5, 0,6 und 0,8% der Formulierung aus Beispiel 9 ausgerüstet. Der Unterschied war, dass der pH nicht eingestellt worden ist, sondern es wurde jeweils 1 g/l 80%ige Essigsäure zugegeben. Die Menge des Binders Appretan N 92111 beliess man konstant bei 70 g/l. Die Prüfungen gegen Staphylococcus aureus ATCC 6338 wurden nach 20 und 30 Wäschen nach EN ISO 6330 (6A) bei 40°C durchgeführt.

Die Muster mit 0,6 und 0,8 der Formulierung nach Beispiel 9 erreichten gute Werte nach 30 Wäschen. Allerdings war hier die Schwankungsbreiten erheblich. Prüft man gegen den Keim Staphylococcus aureus ATCC 6538 P statt gegen den Standardkeim in diesen Prüfungen, den Staphylococcus aureus ATCC 6538, so erhält man bei den beiden Konzentrationen 0,6 und 0,8% der erfindungsgemässen Formulierung aus Beispiel 9 bei allen Prüfungen gute Werte, d.h. über 2 für den Logarithmus der Keimreduktion und mit 0,5% der Formulierung auch noch nach 20 Wäschen eine 3,1 allerdings nur noch eine 0,5 nach 30 Wäschen.

Das verwendete Gewebe aus Polyamid hat sich bei allen Arbeiten als schwierig auszurüstendes Material herausgestellt. Dies gilt bezüglich der Waschbeständigkeit genauso wie auch bezüglich der Verfärbung im Sonnenlicht.

### Beispiele 47 bis 50

| Beispiel | 47 | 48 | 49 | 50 |
|---|---|---|---|---|
| Textil | Polyester Dacron 54 spun mit ca. 120 g/m² | | | |
| Rezeptur | | | | |
| Sandozin MRN fl [g/l] | 1,0 | 1,0 | 1,0 | 1,0 |
| Essigsäure 80% [g/l] | 1,0 | 1,0 | 1,0 | 1,0 |
| Appretan N 92111 [g/l] | --- | 70 | --- | 70 |
| Formulierung nach Beispiel 9 [g/l] | 9,0 | 9,0 | 14,0 | 14,0 |
| | | | | |
| Daten Applikation (Foulard; Spannrahmen) | | | | |
| Pick-up [%] (100 x g Flottenaufnahme pro g trockenes Textil) | 75 | 74 | 73 | 75 |
| Kondensationsbedingungen [°C; s] | 150; 45 | 150; 45 | 150; 45 | 150; 45 |
| Konzentration Formulierung Beispiel 9 [%] | 0,67 | 0,66 | 1,02 | 1,05 |
| | Log Keimzahlreduktion von Staphylococcus aureus ATCC 6538 nach JISL 1902:2002 | | | |
| Vorbehandlung des Musters für antibakterielle Prüfungen | | | | |
| Originalzustand, (ungewaschen) | >4,6 | >4,6 | 3,0 | >4,6 |
| 10 Wäschen bei 40°C | 2,6 | 2,6 | 2,6 | 3,5 |
| 20 Wäschen bei 40°C | 2,3 | 2,3 | 2,0 | 3,7 |
| 30 Wäschen bei 40°C | 1,4 | 0,5 | 0,7 | 1,6 |

### Beispiele 51 bis 54

| Beispiel | 51 | 52 | 53 | 54 |
|---|---|---|---|---|
| Textil | Polyester Trevira mit ca. 220 g/m² | | | |
| Rezeptur | | | | |
| Sandozin MRN fl [g/l] | 1,0 | 1,0 | 1,0 | 1,0 |
| Essigsäure 80% [g/l] | 1,0 | 1,0 | 1,0 | 1,0 |
| Appretan N 92111 [g/l] | --- | 120 | --- | 120 |
| Formulierung nach Beispiel 9 [g/l] | 14,0 | 14,0 | 23,0 | 23,0 |
| | | | | |
| Daten Applikation (Foulard; Spannrahmen) | | | | |
| Pick-up [%] (100 x g Flottenaufnahme pro g trockenes Textil) | 48 | 43 | 48 | 46 |
| Kondensationsbedingungen [°C; s] | 150; 45 | 150; 45 | 150; 45 | 150; 45 |
| Konzentration Formulierung Beispiel 9 [%] | 0,67 | 0,60 | 1,10 | 1,05 |
| | Log Keimzahlreduktion von Staphylococcus aureus ATCC 6538 nach JISL 1902:2002 | | | |
| Vorbehandlung des Musters für antibakterielle Prüfungen | | | | |
| Originalzustand, (ungewaschen) | >4,0 | >4,0 | >4,0 | >4,0 |
| 10 Wäschen bei 40°C | >4,0 | >4,0 | >4,0 | >4,0 |
| 20 Wäschen bei 40°C | >4,0 | >4,0 | >4,0 | >4,0 |
| 30 Wäschen bei 40°C | 1,1 | 3,1 | 1,6 | >4,0 |

### Beispiele 55 bis 58

| Beispiel | 55 | 56 | 57 | 58 |
|---|---|---|---|---|
| Textil | Polyester Tersuisse Art. 9046 mit ca. 230 g/m² | | | |
| Rezeptur | | | | |
| Sandozin MRN fl [g/l] | 1,0 | 1,0 | 1,0 | 1,0 |
| Essigsäure 80% [g/l] | 1,0 | 1,0 | 1,0 | 1,0 |
| Appretan N 92111 [g/l] | --- | 70 | --- | 70 |
| Formulierung nach Beispiel 9 [g/l] | 9,0 | 9,0 | 14,0 | 14,0 |
| | | | | |
| Daten Applikation (Foulard; Spannrahmen) | | | | |
| Pick-up [%] (100 x g Flottenaufnahme pro g trockenes Textil) | 69 | 78 | 77 | 73 |
| Kondensationsbedingungen [°C; s] | 150; 45 | 150; 45 | 150; 45 | 150; 45 |
| Konzentration Formulierung Beispiel 9 [%] | 0,67 | 0,66 | 1,02 | 1,05 |
| | Log Keimzahlreduktion von Staphylococcus aureus ATCC 6538 nach JISL 1902:2002 | | | |
| Vorbehandlung des Musters für antibakterielle Prüfungen | | | | |
| Originalzustand, (ungewaschen) | >4,9 | 3,2 | 2,8 | >4,9 |
| 10 Wäschen bei 40°C | 3,6 | 2,9 | 2,5 | 3,8 |
| 20 Wäschen bei 40°C | 3,3 | 2,8 | 2,1 | 3,1 |
| 30 Wäschen bei 40°C | 1,3 | 2,5 | 1,4 | 2,8 |

### Beispiele 59 bis 62

| Beispiel | 59 | 60 | 61 | 62 |
|---|---|---|---|---|
| Textil | Polyester Interlock Art. 1880 mit ca. 160 g/m² | | | |
| Rezeptur | | | | |
| Sandozin MRN fl [g/l] | 1,0 | 1,0 | 1,0 | 1,0 |
| Essigsäure 80% [g/l] | 1,0 | 1,0 | 1,0 | 1,0 |
| Appretan N 92111 [g/l] | --- | 70 | --- | 70 |
| Formulierung nach Beispiel 9 [g/l] | 8,0 | 9,0 | 14,0 | 14,0 |
| | | | | |
| Daten Applikation (Foulard; Spannrahmen) | | | | |
| Pick-up [%] (100 x g Flottenaufnahme pro g trockenes Textil) | 77 | 85 | 78 | 90 |
| Kondensationsbedingungen [°C; s] | 150; 45 | 150; 45 | 150; 45 | 150; 45 |
| Konzentration Formulierung Beispiel 9 [%] | 0,61 | 0,68 | 1,01 | 1,17 |
| | Log Keimzahlreduktion von Staphylococcus aureus ATCC 6538 nach JISL 1902:2002 | | | |
| Vorbehandlung des Musters für antibakterielle Prüfungen | | | | |
| Originalzustand, (ungewaschen) | >4,7 | >4,7 | >4,7 | >4,7 |
| 10 Wäschen bei 40°C | 3,4 | >4,7 | >4,7 | >4,7 |
| 20 Wäschen bei 40°C | 0,2 | 3,2 | 1,9 | 3,3 |
| 30 Wäschen bei 40°C | 0,9 | 1,4 | 1,3 | 2,0 |

Als typische Beispiele zur Verwendung von Textilien, die wie oben beschrieben ausgerüstet worden sind, können genannt werden: Bekleidungstextilien, insbesondere Arbeitsbekleidung, Uniformen und vor allem Freizeit- und Sportbekleidung, Bettwaren, textile Tapeten, Sitzbezüge, Polstermöbel und Teppiche, Tischtücher, Stoffe für Schirme, Sonnen- und Sichtschutz.

### Beispiele 63 und 64

Versuche mit Bügelleichtausrüstungen auf Basis vernetzte Melaminharze appliziert auf Baumwolle

| Beispiel | 63 | 64 |
|---|---|---|
| Muster Rezeptur | Baumwolle, Gabardine, 200 g/m² | Baumwolle, Gabardine, 200 g/m² |
| Arkofix NES fl (Vernetzer) [g/l] | 50 | 50 |
| Magnesiumchlorid (Vernetzungskat.) [g/l] | 7,5 | 7,5 |
| Ceraperm MW fl (Weichmacher) [g/l] | 30 | 30 |
| Formulierung nach Beispiel 7 [g/l] | 15 | --- |
| Formulierung nach Beispiel 9 [g/l] | --- | 15 |
| pH gemessen | 4,5 | 4,4 |
| | | |
| Daten Applikation (Foulard; Spannrahmen) | | |
| Pick-up (g Flottenaufnahme : g trockenes Textil) | 0,70 | 0,72 |
| Trocknungsbedingungen [°C; s] | 120; 120 | 120; 120 |
| Kondensationsbedingungen [°C; s] | 160; 90 | 160; 90 |
| Konzentration Formulierung Beispiel 9 [%] | 1,05 | 1,1 |
| | | |
| Prüfungen nach Vorbehandlung des Musters | Log Keimzahlreduktion von Staphylococcus aureus ATCC 6538 nach JISL 1902:2002 | |
| Originalzustand, (ungewaschen, unbelichtet) | >4,9 | > 4,9 |
| 10 Wäschen bei 40°C | >4,9 | > 4,9 |
| 20 Wäschen bei 40°C | >4,9 | > 4,9 |
| 30 Wäschen bei 40°C | > 4,9 | > 4,9 |
| | | |
| | Visuelle Bewertung jeweils nach 7 Tagen Tageslichtexposition nach der jeweils angegebenen Zahl Wäschen | |
| ungewaschen, sofort | keine Verfärbung | keine Verfärbung |
| ungewaschen, nach 7 Tagen Sonnenlicht (SL) | keine Verfärbung | keine Verfärbung |
| 1 Wäsche, nach 7 Tagen SL | keine Verfärbung | keine Verfärbung |
| 2 Wäschen, nach 7 Tagen SL | keine Verfärbung | keine Verfärbung |
| 3 Wäschen, nach 7 Tagen SL | keine Verfärbung | keine Verfärbung |
| 10 Wäschen, nach 7 Tagen SL | keine Verfärbung | keine Verfärbung |
| 20 Wäschen, nach 7 Tagen SL | keine Verfärbung | keine Verfärbung |
| 30 Wäschen, nach 7 Tagen SL | keine Verfärbung | keine Verfärbung |

Diese Versuche wurden auch mit weiteren Formulierungen durchgeführt, deren Herstellung hier nicht explizit beschrieben wird, so z.B. mit einer Formulierung mit 10% bei 20°C gesättigter Pinakryptollösung, einer Formulierung mit 10% bei 20°C gesättigter Pinakryptollösung und 0,5% Benzotriazol und einer Formulierung mit 1,5% Carboxy-methylcellulose als Verdickungsmittel. Alle diese Formulierungen ergaben eine sehr gute Waschbeständigkeit und zeigen keine Verfärbung, wenn sie wie in der Rezeptur der Beispiele 63 und 64 beschrieben appliziert wurden.

Typische Beispiele zur Verwendung von Textilien, die wie oben beschrieben ausgerüstet worden sind, sind bügelleicht ausgerüstete Bekleidungstextilien wie Hemden, Blusen, Heimtextilien wie Tischdecken und Servietten.

Es wurden auch Applikationen der Formulierung nach Beispiel 9 zusammen mit Fluorcarbonen und polymeren Bindern getestet. Dazu wurden verschiedene Fluorcarbone der Clariant durchgetestet. Es handelt sich dabei um Nuva TTC, eine Perfluoracrylat/Polyurethan-Dispersion, Nuva HPS fl. und Nuva HPC, beides Perfluoracrylatcopolymerisate und Nuva HPU, einem Perfluoralcylacrylcopolymerisat.

### Beispiel 65 und 66

| Beispiel | 65 | 66 |
|---|---|---|
| Muster Rezeptur | Baumwolle, Gabardine, 200 g/m² | Baumwolle, Gabardine, 200 g/m² |
| Fluowet UD fl (fluoriertes Netzmittel) [g/l] | 5,0 | 5,0 |
| Essigsäure 80% [g/l] | 0,5 | 0,5 |
| Nuva TTC [g/l] | 60 | 60 |
| Appretan N 92111 | --- | 70 |
| Formulierung nach Beispiel 9 [g/l] | 15 | 15 |
| pH gemessen | 4,5 | 4,4 |
| | | |
| Daten Applikation (Foulard; Spannrahmen) | | |
| Pick-up (g Flottenaufnahme : g trockenes Textil) | 0,72 | 0,73 |
| Kondensationsbedingungen [°C; s effektiv] | 150; 60 | 150; 60 |
| Konzentration Formulierung Beispiel 9 [%] | 1,08 | 1,1 |
| | | |
| Prüfungen nach Vorbehandlung des Musters | Log Keimzahlreduktion von Staphylococcus aureus ATCC 6538 nach ASTM E 21-49 | |
| Originalzustand, (ungewaschen, unbelichtet) | > 4,9 | > 4,9 |
| 10 Wäschen bei 40°C | > 4,9 | > 4,9 |
| 20 Wäschen bei 40°C | > 4,9 | > 4,9 |
| | | |
| | Visuelle Bewertung jeweils nach 7 Tagen Tageslichtexposition nach der jeweils angegebenen Zahl Wäschen | |
| ungewaschen, sofort | keine Verfärbung | keine Verfärbung |
| ungewaschen, nach 7 Tagen Sonnenlicht (SL) | keine Verfärbung | keine Verfärbung |
| 1 Wäsche, nach 7 Tagen SL | keine Verfärbung | keine Verfärbung |
| 2 Wäschen, nach 7 Tagen SL | keine Verfärbung | keine Verfärbung |
| 3 Wäschen, nach 7 Tagen SL | keine Verfärbung | keine Verfärbung |
| 10 Wäschen, nach 7 Tagen SL | keine Verfärbung | keine Verfärbung |
| 20 Wäschen, nach 7 Tagen SL | keine Verfärbung | keine Verfärbung |

Die Beispiele wurden alle analog durchgeführt. Auf dem Polyester Trevira wurden die Konzentrationen der Fluorcarbone und des Binders auf 90 beziehungsweise auf 100 g/l erhöht, so dass die applizierten Mengen vergleichbar mit dem Baumwollgewebe bleiben. Auf dem Polyamid wurden die gleichen Konzentrationen verwendet, wie auf dem Baumwollgewebe. Bei bis zu 20 Waschzyklen zeigten alle Muster eine hervorragende antibakterielle Wirkung. Im ungewaschenen Zustand zeigten alle Muster im Spray-Test nach AATCC 22 100%, also vollständige Wasserabweisung.

Als typische Beispiele zur Verwendung von Textilien, die wie oben beschrieben ausgerüstet worden sind, können genannt werden: Bekleidungstextilien, insbesondere Arbeitsbekleidung, Uniformen und Wasser abweisende Freizeit- und Sportbekleidung, Bettwaren, textilene Tapeten, Sitzbezüge, Polstermöbel und Teppiche, Tischtücher, Stoffe für Schirme, Sonnen-und Sichtschutz.

Es wurden auch Applikationen der Formulierung nach Beispiel 9 zusammen mit Flammschutzmitteln untersucht. Dazu wurden verschiedene Flammschutzmittel der Clariant getestet. Auf Baumwolle wurden sie zusammen mit einem Vernetzer appliziert. Es handelt sich dabei um Pekoflam DPN 1, einem nicht-ionogenen Phosphorsäureester und Pekoflam HSD fl, einer Formulierung mit Ammoniumpolyphosphat und Harnstoff für Anwendungen auf Baumwolle und Mischgewebe Baumwolle/Polyester und Pekoflam PES, einem Gemisch aus cyclischen Di- und Triphosphonaten für die Ausrüstung von Polyester.

### Beispiel 67 und 68

| Beispiel | 67 | 68 |
|---|---|---|
| Muster Rezeptur | Baumwolle, Gabardine, 200 g/m² | Polyester Trevira 220 g/m² |
| Pekoflam DPN 1 [g/l] | 350 | --- |
| Pekoflam PES [g/l] | --- | 400 |
| Cassurit HML (Vernetzer) [g/l] | 60 | 60 |
| Phosphorsäure 85%ig [g/l] | 12 | 70 |
| Ammoniak 25%ig [g/l] | | |
| Formulierung nach Beispiel 9 [g/l] | 18 | 20 |
| pH gemessen (pH-Papier) | ca. 1 | ca. 6 |
| | | |
| Daten Applikation (Foulard; Spannrahmen) | | |
| Pick-up (g Flottenaufnahme : g trockenes Textil) | 0,8 | 0,65 |
| Nachbehandlung | waschen mit Sodalösung bei 80°C | waschen mit Netzmittel bei 60°C |
| Trocknungsbedingungen [°C; s] | 120; 120 | 120; 120 |
| Kondensationsbedingungen [°C; s effektiv] | 160;120 | 150; 60 |
| Konzentration Formulierung Beispiel 9 [%] | 1,4 | 1,3 |
| | | |
| Prüfungen nach Vorbehandlung des Musters | Log Keimzahlreduktion von Staphylococcus aureus ATCC 6538 nach ASTM E 21-49 | |
| Originalzustand, (ungewaschen, unbelichtet) | > 4,5 | >4,5 |
| 10 Wäschen bei 40°C | > 4,5 | > 4,5 |
| 20 Wäschen bei 40°C | > 4,5 | 3,8 |

Typische Beispiele zur Verwendung von Textilien, die wie oben beschrieben ausgerüstet worden sind, sind Bekleidungstextilien, insbesondere Arbeitsbekleidung, Uniformen, Bettwaren, textile Tapeten, Sitzbezüge, Polstermöbel und Teppiche, Tischtücher, Stoffe für Schirme, Sonnen- und Sichtschutz.

Es wurde auch die Applikationen der Formulierung nach Beispiel 9 mittels Ausziehverfahren getestet. Es wurde der Versuch unternommen, die genannte Formulierung mittels Ausziehverfahren auf die Grundsubstrate zu applizieren. Wie die nachstehenden Beispiele zeigen, zeigen sich dabei überraschenderweise hervorragende Ergebnisse.

### Beispiele 69 bis 71

| Beispiel | 69 | 70 | 71 |
|---|---|---|---|
| Muster Rezeptur | Baumwolle, Gabardine, 200 g/m² | Polyester Trevira 220 g/m² | Polyamid Jersey 160 g/m² |
| Sandozin MRN (Netzmittel) [g/l] | 1,0 | 1,0 | 1,0 |
| pH mit 80%iger Essigsäure einstellen [pH] | 5 | 5 | 5 |
| Formulierung nach Beispiel 9 [in % bez. auf die Masse des Textils] | 1,0 | 1,0 | 1,0 |
| Flottenverhältnis | 1:10 | 1:10 | 1:10 |
| Auszugstemperatur [°C] | 60 | 60 | 60 |
| Auszugszeit [Minuten] | 45 | 45 | 45 |
| Trocknungsbedingungen [°C; s] | 120; 120 | 120; 120 | 120; 120 |
| Kondensationsbedingungen [°C; s] | 160; 90 | 160; 90 | 160; 90 |
| | | | |
| | | | |
| Prüfungen nach Vorbehandlung des Musters | Log Keimzahlreduktion von Staphylococcus aureus ATCC 6538 nach ASTM E 21-49 | | |
| Originalzustand, (ungewaschen, unbelichtet) | > 5,0 | > 5,0 | > 5,0 |
| 10 Wäschen bei 40°C | 4,5 | 4,6 | |
| 20 Wäschen bei 40°C | 2,8 | 1,2 | 3,8 ? |
| 30 Wäschen bei 40°C | 3,3 | 0,6 | > 5,0 |

Es wurde festgestellt, dass das Ausziehverfahren im Prinzip auf den Standardgewebetypen mit guten Ergebnissen angewendet werden kann. Die Verwendungen von Textilien, die nach diesem Verfahren ausgerüstet worden sind, sind vielfältig. Oft werden Wirkwaren, zum Teil sogar mehr oder weniger fertig konfektioniert, mittels Ausziehverfahren ausgerüstet. Dies erfolgt, weil sie auf dem Spannrahmen leicht verzogen würden. Gleichzeitig finden im Ausziehverfahren oft weitere Veredelungsschritte statt, wie das Färben, die Zugabe von Weichmachern und dergleichen. Die Artikel, die nach dem Verfahren ausgerüstet werden können, sind beispielsweise Strümpfe, Strupfhosen, T-Shirts, Pullover und Sweatshirts.

### Beispiel 72

In einer weiteren Testserie wurde Seide und ein Mischgewebe aus Baumwolle und Polyester mit Silbersalz + Pinakryptolgelb getestet, wobei sich sowohl mit wie auch ohne Bindemittel (Appreton N 92111) gute antimikrobielle Ergebnisse ergaben.
Auch nach 20 Waschzyklen war die Konservierung noch zufrieden stellend.

## Patentansprüche

1. Verfahren zum Ausrüsten von Fasern und/oder Textilien mit einer antimikrobiellen Wirkstoffstoffkomponente, bei dem als antimikrobielle Wirkstoffkomponente eine durch eine Zusatzkomponente desensibilisierte Silberkomponente sowie gegebenenfalls ein oder mehrere weitere antimikrobielle Komponenten auf die Fasern bzw. Textilien aufgebracht werden.

2. Verfahren gemäß Anspruch 1, **dadurch gekennzeichnet, dass** als antimikrobielle Wirkstoftkomponente eine, durch eine Zusatzkomponente desensibilisierte Silberkomponente auf die Fasern bzw. Textilien aufgebracht werden.

3. Verfahren gemäß einem der Ansprüche 1 oder 2, **dadurch gekennzeichnet, dass** eine antimikrobielle Wirkstoffkomponente eingesetzt wird, die als Silberkomponente ein Silbersalz und als Zusatzkomponente eine organische, desensibilisierende Komponente enthält.

4. Verfahren gemäß einem der Ansprüche 1 bis 3, **dadurch gekennzeichnet, dass** eine antimikrobielle Wirkstoffkomponente eingesetzt wird, die als Silberkomponente ein in situ gebildetes Silbersalz und als Zusatzkomponente eine organische, desensibilisierende Komponente enthält.

5. Verfahren gemäß einem der Ansprüche 1 bis 4, **dadurch gekennzeichnet, dass** eine antimikrobielle Wirkstoffkomponente eingesetzt wird, die als Silberkomponente ein Silbersalz und als desensibilisierende Komponente mindestens ein Chinolin-Derivat und/oder ein Benzotriazol-Derivat enthält.

6. Verfahren gemäß einem der Ansprüche 1 bis 5, **dadurch gekennzeichnet, dass** die Silberkomponente, bezogen auf das Gesamtgewicht der Fasern bzw. Textilien, in einer Menge von 0,0001 Gew.-% bis 0,5 Gew.-%, insbesondere von 0,001 bis 0,05 Gew.%, eingesetzt wird.

7. Verfahren gemäß einem der Ansprüche 1 bis 6, **dadurch gekennzeichnet, dass** als desensibilisierende Komponente ein Chinolin-Derivat in einer Menge, bezogen auf das Gesamtgewicht der Fasern bzw. Textilien, von 0,1 ppm bis 500 ppm, insbesondere von 1 ppm bis 150 ppm, eingesetzt wird.

8. Verfahren gemäß einem der Ansprüche 1 bis 7, **dadurch gekennzeichnet, dass** eine antimikrobielle Wirkstoffkomponente eingesetzt wird, die als Silberkomponente ein wasserunlösliches Silbersalz und als desensibilisierende Komponente mindestens ein Chinolin-Derivat und ggf. ein Benzotriazol-Derivat in einer Menge (bezogen auf das Gesamtgewicht der Fasern bzw. Textilien) von 0,5 ppm bis 2500 ppm enthält.

9. Verfahren gemäß einem der Ansprüche 1 bis 8, **dadurch gekennzeichnet, dass** es sich bei der wasserunlöslichen Silberkomponente um ein oder mehrere Salze aus der Gruppe der Chloride, Bromide, Iodide, Sulfate und Tosylate handelt.

10. Verfahren gemäß einem der Ansprüche 1 bis 9, **dadurch gekennzeichnet, dass** es sich bei der wasserunlöslichen Silberkomponente um ein in situ aus Silbernitrat und Metallchlorid hergestelltes Silberchlorid handelt.

11. Verfahren gemäß einem der Ansprüche 1 bis 10, **dadurch gekennzeichnet, dass** es sich bei der desensibilisierenden Komponente Pinakryptolgelb als einzige Komponente oder aber um eine Kombination von Pinakryptolgelb mit mindestens einer anderen desensibilisierenden Komponente handelt.

12. Verfahren gemäß einem der Ansprüche 1 bis 11, **dadurch gekennzeichnet, dass** es sich bei dem Verfahren zur Ausrüstung der Fasern und/oder Textilien um ein Foulardverfahren, Auszugsverfahren, Schaumauftragsverfahren, Beschichtungsverfahren oder Sprühverfahren handelt.

13. Antimikrobielle Zubereitung zum Ausrüsten von Fasern und/oder Textilien mit einer antimikrobiellen Wirkstoffstoffkomponente, enthaltend als antimikrobielle Wirkstoffkomponente mindestens eine Silberkomponente, eine desensibilisierende Zusatzkomponente sowie gegebenenfalls ein oder mehrere Hilfs- und Zusatzstoffe.

14. Zubereitung gemäß Patentanspruch 13, d. g. dass sie 0,01 % bis 10 % einer Silberkomponente und 0,001 % bis 2 % Pinakryptolgelb enthält.

15. Mit einer antimikrobiellen Wirkstoftkomponente ausgerüstete Fasern und Textilien, hergestellt nach einem Verfahren gemäß einem der Ansprüche 1 bis 12.

16. Mit einer antimikrobiellen Wirkstoffkomponente ausgerüstete Fasern und Textilien gemäß Anspruch 15, **dadurch gekennzeichnet, dass** sie im Wesentlichen aus Baumwolle, Cellulose, Seide, Polyester, Polyamid, anderen synthetischen oder natürlichen Fasern oder aus Mischungen der genannten Materialien bestehen.

17. Mit einer antimikrobiellen Wirkstoffkomponente ausgerüstete Textilien gemäß Anspruch 15 oder 16, **dadurch gekennzeichnet, dass** es sich um gewebte Waren, gewirkte Waren, Vliese oder Garne handelt.

18. Verwendung einer Zubereitung gemäß einem der Patentansprüche 13 oder 14 zum Schutz von Fasern und Textilien gegen einen Befall von Bakterien.

19. Verwendung einer Zubereitung gemäß Anspruch 18, **dadurch gekennzeichnet, dass** sie ein Silbersalz und als desensibilisierende Komponente mindestens ein Chinolin-Derivat und/oder ein Benzotriazol-Derivat enthält, zum Schutz von Fasern und Textilien gegen einen Befall durch Bakterien.
